# EUROPEAN PATENT SPECIFICATION

(11) **EP 4 191 578 B1**
(45) Date of publication and mention of the grant of the patent: **06.05.2026**
(21) Application number: 21878002.1
(22) Date of filing: 06.10.2021
(51) Int. Cl.: G10L 17/24, G10L 15/18, G06F 3/0488, G06F 3/16, G10L 15/30, G10L 15/26, G10L 15/22, G06F 3/0482, G06N 5/04

(54) **ELECTRONIC DEVICE, AND PARAMETER ACQUISITION METHOD FOR UNDERSTANDING NATURAL LANGUAGE**
ELEKTRONISCHE VORRICHTUNG UND PARAMETERERFASSUNGSVERFAHREN ZUM VERSTÄNDNIS VON NATÜRLICHER SPRACHE
DISPOSITIF ÉLECTRONIQUE ET PROCÉDÉ D'ACQUISITION DE PARAMÈTRE POUR COMPRENDRE UNE LANGUE NATURELLE

(30) Priority: 07.10.2020 KR 20200129133
(43) Date of publication of application: 07.06.2023
(73) Proprietor: Samsung Electronics Co., Ltd., Suwon-si, Gyeonggi-do 16677 (KR)
(72) Inventor: KIM, Kichul, Suwon-si, Gyeonggi-do 16677 (KR); BYEON, Jooyong, Suwon-si, Gyeonggi-do 16677 (KR); LEE, Jongwon, Suwon-si, Gyeonggi-do 16677 (KR)
(74) Representative: Nederlandsch Octrooibureau
(86) International application number: PCT/KR2021/013716
(87) International publication number: WO 2022/075751

(56) References cited:
- EP-A1- 2 624 180
- EP-B1- 3 942 399
- KR-A- 20180 068 850
- KR-A- 20180 082 347
- KR-A- 20190 115 356
- US-A1- 2018 196 683
- US-A1- 2019 166 073
- US-A1- 2020 050 940

## Description

### [Technical Field]

The disclosure relates to an electronic device. More particularly, the disclosure relates to an electronic device and a method of obtaining a natural language understanding (NLU) parameter by an electronic device for obtaining a user input, such as a voice and text, and outputting a processing result of NLU.

### [Background Art]

With the development of mobile communication technology and processor technology, portable electronic devices (hereinafter, electronic devices) can implement various functions in addition to a conventional call function. Further, a variety of platforms may provide interactive services based on artificial intelligence or natural language understanding (NLU), such as a voice assistant or a chatbot, for electronic devices.

A user may perform a desired function by giving a command to an electronic device through utterance or text. For example, a service for performing designated intent rather than a simple conversation, such as a task-oriented chatbot, may be provided through an electronic device. An artificial intelligence (AI) engine that provides such a service needs to understand a user's command, understand the intent of the user, and obtain a necessary parameter.

The above information is presented as background information only, and to assist with an understanding of the disclosure. No determination has been made, and no assertion is made, as to whether any of the above might be applicable as prior art with regard to the disclosure.

US 2018/196683 A1, 12 July 2018, is about systems and processes for application integration with a digital assistant. A method includes receiving an audio input including a natural-language user input and identifying an intent object of a set of intent objects. The intent object may be derived from the natural-language user input. The method further includes identifying a software application associated with the intent object of the set of intent objects, providing the intent object to the software application to cause the software application to perform a task associated with the intent object, receiving a result response indicating whether the task was successfully performed, and providing an output indicating whether the task was performed.

EP 2 624 180 Al, 7 August 2013, is about a system of integrating remote services and a method of operating said system. The system comprises a management system, a database with a table of users and a table of data associated with each user, a message input and recognition system for written messages, voice messages, or text messages, etc., an output system, a dialogue system, and an information exchanging system for exchanging information with remote third party services, where the information exchanging system is connected to the management system and comprises connectors suitable for each type of service such that at least one connector is suitable for performing a commercial transaction that can be requested by the user. It is particularly applicable in the field of purchasing electronic tickets or products and in the field of bank transactions from a mobile terminal.

### [Disclosure of Invention]

### [Technical Problem]

An AI engine (e.g., a voice assistant or a chatbot) may lack parameters necessary to understand and process a command from a user. In this case, to obtain the necessary parameters, the AI engine needs to send an additional inquiry to the user, and the user is required to respond appropriately. This process of continuously asking the user about information required to process the command of the user may cause the user to feel tired and may have a negative impact on the overall experience of the user.

Aspects of the disclosure are to address at least the above-mentioned problems and/or disadvantages, and to provide at least the advantages described below. Accordingly, an aspect of the disclosure is to provide an electronic device and a method of obtaining a parameter for natural language understanding that are capable of performing a function corresponding to a user input without an additional query even when there is a lack of parameters required for intent extracted from the user input.

### [Solution to Problem]

Additional aspects will be set forth in part in the description which follows and, in part, will be apparent from the description, or may be learned by practice of the presented embodiments.

In accordance with an aspect of the disclosure, an electronic device is provided. The electronic device includes a display including a touchscreen, a microphone configured to receive a voice input from a user, a memory, and at least one processor configured to be operatively connected to the display, the microphone, and the memory, wherein the at least one processor may be configured to obtain an instruction based on text that is input through a touch input on the display or a voice input that is input through the microphone, obtain intent corresponding to the instruction, identify at least one parameter additionally required to perform an operation corresponding to the obtained intent, and obtain the at least one additionally required parameter from at least one application stored in the memory.

In accordance with another aspect of the disclosure, a method for obtaining a parameter for natural language understanding by an electronic device is provided. The method includes obtaining an instruction based on a touch input or a voice input from a user, obtaining intent corresponding to the instruction, identifying at least one parameter additionally required to perform an operation corresponding to the obtained intent, and obtaining the at least one additionally required parameter from at least one application.

### [Advantageous Effects of Invention]

According to the various aspects of the disclosure, it is possible to provide an electronic device and a method of obtaining a parameter for natural language understanding that are capable of performing a function corresponding to a user input without an additional query by obtaining a lacking parameter from a different domain (or application) even when there is a lack of parameters required for intent extracted from the user input.

Other effects, advantages, and salient features of the disclosure will become apparent to those skilled in the art from the following detailed description, which, taken in conjunction with the annexed drawings, discloses various embodiments of the disclosure.

### [Brief Description of Drawings]

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment of the disclosure;
FIG. 2 is a block diagram illustrating an integrated intelligence system according to an embodiment of the disclosure;
FIG. 3 illustrates a form in which information about a relationship between a concept and an operation is stored in a database according to an embodiment of the disclosure;
FIG. 4 illustrates a device forming an integrated intelligent system according to an embodiment of the disclosure;
FIG. 5 illustrates a case of requesting an NLU parameter from a user according to an embodiment of the disclosure;
FIG. 6 is a block diagram illustrating an electronic device according to an embodiment of the disclosure;
FIG. 7 illustrates architecture of an integrated intelligent system according to an embodiment of the disclosure;
FIG. 8 illustrates a case in which an AI engine is embedded in an electronic device according to an embodiment of the disclosure;
FIG. 9 illustrates an example of requesting a required parameter according to an embodiment of the disclosure;
FIG. 10 illustrates an example in which an AI engine requests and receives parameter information from an application according to an embodiment of the disclosure;
FIG. 11 is a flowchart illustrating a method of obtaining a parameter according to an embodiment of the disclosure;
FIG. 12 illustrates architecture of an integrated intelligent system according to an embodiment of the disclosure;
FIG. 13 illustrates an operation of registering and approving an application of an electronic device according to an embodiment of the disclosure;
FIG. 14 illustrates a screen for recommending a parameter in an electronic device according to an embodiment of the disclosure;
FIG. 15 illustrates a screen in which a plurality of applications provides an additional parameter in an electronic device according to an embodiment of the disclosure;
FIG. 16 illustrates an example of registering a required parameter according to an embodiment of the disclosure;
FIG. 17 illustrates an example of registering application information for providing a parameter according to an embodiment of the disclosure; and
FIG. 18 is a flowchart illustrating a method of obtaining a parameter for providing an intelligent service based on natural language understanding according to an embodiment of the disclosure.

Throughout the drawings, it should be noted that like reference numbers are used to depict the same or similar elements, features, and structures.

### [Mode for the Invention]

The following description with reference to the accompanying drawings is provided to assist in a comprehensive understanding of various embodiments of the disclosure as defined by the claims . It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but are merely used to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims .

It is to be understood that the singular forms "a," "an," and "the" include plural referents unless the context clearly dictates otherwise. Thus, for example, reference to "a component surface" includes reference to one or more of such surfaces.

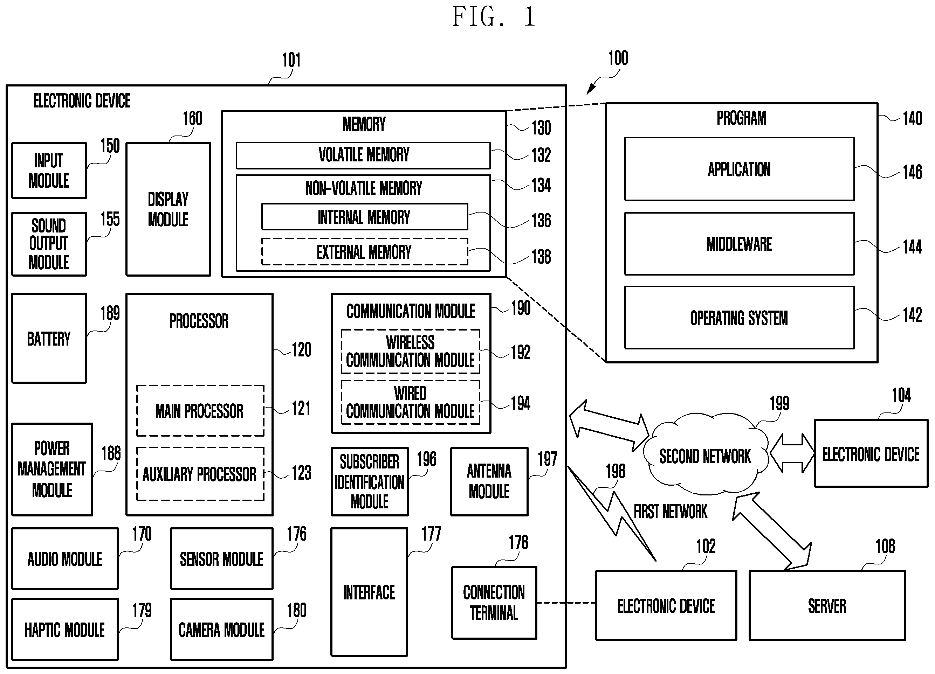

FIG. 1 is a block diagram illustrating an electronic device in a network environment according to an embodiment of the disclosure. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include at least one processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a transceiver or other communication module 190, a subscriber identification module (SIM) 196, and/or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The at least one processor 120 may execute, for example, software (e.g., a program 140) to control at least one other component (e.g., a hardware or software component) of the electronic device 101 coupled with the at least one processor 120, and may perform various data processing or computation. According to one embodiment, as at least part of the data processing or computation, the at least one processor 120 may store a command or data received from another component (e.g., the sensor module 176 or the communication module 190) in volatile memory 132, process the command or the data stored in the volatile memory 132, and store resulting data in non-volatile memory 134. According to an embodiment, the at least one processor 120 may include a main processor 121 (e.g., a central processing unit (CPU) or an application processor (AP)), and/or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof, but is not limited thereto. The artificial intelligence model may, additionally or alternatively, include a software structure other than the hardware structure.

The memory 130 may store various data used by at least one component (e.g., the at least one processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, and/or an application 146.

The input module 150 may receive a command or data to be used by another component (e.g., the at least one processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to or consumed by the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, a fuel cell, or a combination thereof.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the at least one processor 120 (e.g., the application processor (AP)) and supports a direct (e.g., wired) communication or a wireless communication. According to an embodiment, the communication module 190 may include a transceiver and/or a wireless communication module 192 (e.g., a cellular communication module, a short-range wireless communication module, or a global navigation satellite system (GNSS) communication module) and/or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the at least one processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

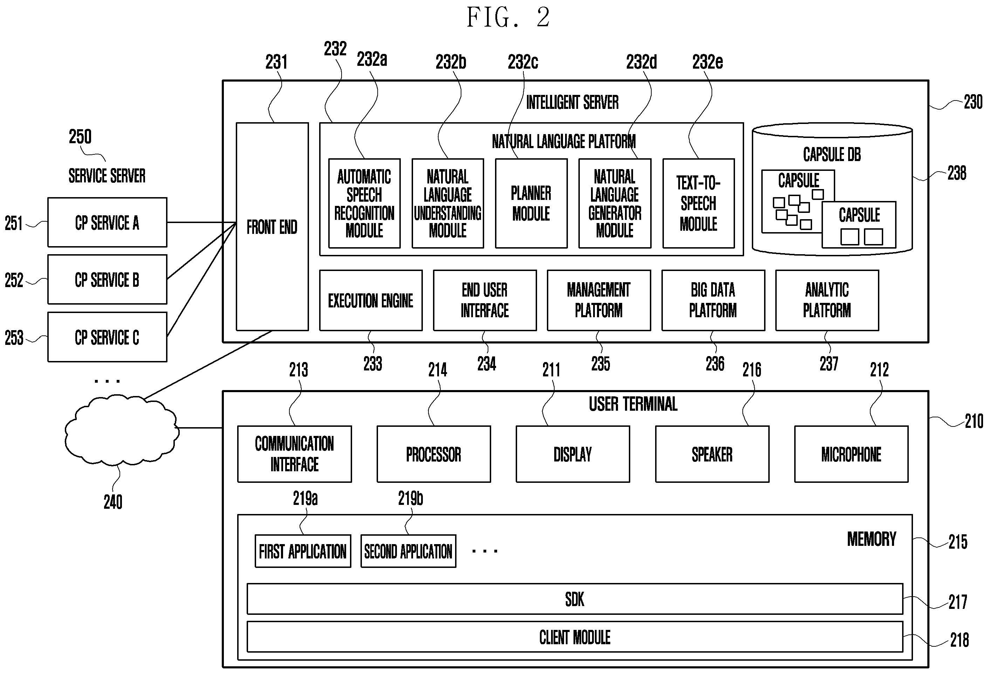

FIG. 2 is a block diagram illustrating an integrated intelligence system according to an embodiment of the disclosure.

Referring to FIG. 2, the integrated intelligence system according to an embodiment may include a user terminal 210, an intelligent server 230, and a service server 250.

The user terminal 210 of an embodiment may be a terminal device (or electronic device) that can be connected to the Internet, for example, a mobile phone, a smartphone, a personal digital assistant (PDA), a notebook computer, a TV, a domestic appliance, a wearable device, an HMD, or a smart speaker.

According to the illustrated embodiment, the user terminal 210 may include a communication interface 213, a microphone 212, a speaker 216, a display 211, a memory 215, and/or at least one processor 214. The listed components may be operatively or electrically connected to each other. The user terminal 210 may include at least some of the components and/or functions of the electronic device 100 of FIG. 1.

The communication interface 213 according to an embodiment may be configured to be connected to an external device to transmit and receive data. The microphone 212 according to an embodiment may receive a sound (e.g., a user's utterance) and may convert the sound into an electrical signal. The speaker 216 according to an embodiment may output an electrical signal as a sound (e.g., a voice). The display 211 according to an embodiment may be configured to display an image or a video. Further, the display 211 according to an embodiment may display a graphic user interface (GUI) of an executed application (or application program).

The memory 215 according to an embodiment may store a client module 218, a software development kit (SDK) 217, and a plurality of applications 219a and 219b. The client module 218 and the SDK 217 may form a framework (or a solution program) for performing a general-purpose function. In addition, the client module 218 or the SDK 217 may form a framework for processing a voice input.

The plurality of applications 219a and 219b in the memory 215 according to an embodiment may be programs for performing a designated function. According to an embodiment, the plurality of applications may include a first application 219a and a second application 219b. According to an embodiment, each of the plurality of applications 219a and 219b may include a plurality of operations for performing a designated function. For example, the applications 219a and 219b may include an alarm application, a message application, and/or a schedule application. According to an embodiment, the plurality of applications 219a and 219b may be executed by the at least one processor 214 to sequentially execute at least some of the plurality of operations.

The at least one processor 214 according to an embodiment may control the overall operation of the user terminal 210. For example, the at least one processor 214 may be electrically connected to the communication interface 213, the microphone 212, the speaker 216, and the display 211 to perform a designated operation.

The at least one processor 214 according to an embodiment may also execute a program stored in the memory 215 to perform a designated function. For example, the at least one processor 214 may execute at least one of the client module 218 or the SDK 217 to perform the following operation for processing a voice input. The at least one processor 214 may control the operation of the plurality of applications 219a and 219b, for example, through the SDK 217. An operation to be described below as the operation of the client module 218 or the SDK 217 may be an operation by execution by the at least one processor 214.

The client module 218 according to an embodiment may receive a voice input. For example, the client module 218 may receive a voice signal corresponding to a user's utterance detected through the microphone 212. The client module 218 may transmit the received voice input to the intelligent server 230. The client module 218 may transmit state information about the user terminal 210, together with the received voice input, to the intelligent server 230. The state information may be, for example, execution state information about an application.

The client module 218 according to an embodiment may also receive a result corresponding to the received voice input. For example, when the intelligent server 230 can produce the result corresponding to the received voice input, the client module 218 may receive the result corresponding to the received voice input. The client module 218 may display the received result on the display 211.

The client module 218 according to an embodiment may also receive a plan corresponding to the received voice input. The client module 218 may display a result of executing a plurality of operations of an application according to the plan on the display 211. For example, the client module 218 may sequentially display results of executing the plurality of operations on the display 211. In another example, the user terminal 210 may display only some (e.g., a result of executing the last operation) of the results of executing the plurality of operations on the display 211.

According to an embodiment, the client module 218 may also receive a request for obtaining information required to produce the result corresponding to the voice input from the intelligent server 230. According to an embodiment, the client module 218 may transmit the required information to the intelligent server 230 in response to the request.

The client module 218 according to an embodiment may transmit information about the result of executing the plurality of operations according to the plan to the intelligent server 230. The intelligent server 230 may identify that the received voice input has been properly processed using the information about the result.

The client module 218 according to an embodiment may include a voice recognition module. According to an embodiment, the client module 218 may recognize a voice input for performing a limited function through the voice recognition module. For example, the client module 218 may perform an intelligent application for processing a voice input for performing an organic operation through a designated input (e.g., Wake up!).

The intelligent server 230 according to an embodiment may receive information relating to a user voice input from the user terminal 210 through a communication network. According to an embodiment, the intelligent server 230 may change data relating to the received voice input into text data. According to an embodiment, the intelligent server 230 may generate, based on the text data, a plan for performing a task corresponding to the user voice input.

According to one embodiment, the plan may be generated by an artificial intelligence (AI) system. The artificial intelligence system may be a rule-based system or a neural network-based system (e.g., a feedforward neural network (FNN)), or a recurrent neural network (RNN). Alternatively, the artificial intelligence system may be a combination of the above systems or a different artificial intelligence system. According to an embodiment, the plan may be selected from a set of predefined plans, or may be generated in real time in response to a user request. For example, the artificial intelligence system may select at least the plan from among a plurality of predefined plans.

The intelligent server 230 according to an embodiment may transmit a result according to the generated plan to the user terminal 210 or may transmit the generated plan to the user terminal 210. According to an embodiment, the user terminal 210 may display the result according to the plan on the display 211. According to an embodiment, the user terminal 210 may display a result of executing an operation according to the plan on the display 211.

The intelligent server 230 according to an embodiment may include a front end 231, a natural language platform 232, a capsule database (DB) 238, an execution engine 233, an end user interface 234, a management platform 235, a big data platform 236, and/or an analytic platform 237.

The front end 231 according to an embodiment may receive a voice input received from the user terminal 210 via a network 240. The front end 231 may transmit a response corresponding to the voice input.

According to an embodiment, the natural language platform 232 may include an automatic speech recognition module (ASR module) 232a, a natural language understanding module (NLU module) 232b, a planner module 232c, a natural language generator module (NLG module) 232d, and/or a text-to-speech module (TTS module) 232e.

The ASR module 232a according to an embodiment may convert a voice input received from the user terminal 210 into text data. The NLU module 232b according to an embodiment may understand a user's intent using the text data of the voice input. For example, the NLU module 232b may understand the user's intent by performing a syntactic analysis or a semantic analysis. The NLU module 232b according to an embodiment may understand the meaning of a word extracted from the voice input using a linguistic feature (e.g., a syntactic element) of a morpheme or phrase and may determine the user's intent by matching the understood meaning of the word to intent.

The planner module 232c according to an embodiment may generate a plan using the intent determined by the NLU module 232b and a parameter. According to an embodiment, the planner module 232c may determine a plurality of domains necessary to perform a task based on the determined intent. The planner module 232c may determine a plurality of operations respectively included in the plurality of domains determined based on the intent. According to an embodiment, the planner module 232c may determine a parameter required to execute the plurality of determined operations or a result value output by executing the plurality of operations. The parameter and the result value may be defined as a concept in a designated format (or class). Accordingly, the plan may include the plurality of operations determined by the intent of the user and a plurality of concepts. The planner module 232c may determine a relationship between the plurality of operations and the plurality of concepts by stages (or hierarchically). For example, the planner module 232c may determine the execution order of the plurality of operations, determined based on the user's intent, based on the plurality of concepts. That is, the planner module 232c may determine the execution order of the plurality of operations, based on the parameter required to execute the plurality of operations and the result output by executing the plurality of operations. Accordingly, the planner module 232c may generate a plan including association information (e.g., ontology) between the plurality of operations and the plurality of concepts. The planner module 232c may generate a plan using information stored in a capsule database in which a set of relationships between concepts and operations is stored.

The NLG module 232d according to an embodiment may change designated information into a text form. The information changed into the text form may be in the form of a natural language utterance. The TTS module 232e according to an embodiment may change information in the text form into information in a voice form.

According to an embodiment, some or all functions of the natural language platform 232 may also be implemented in the user terminal 210.

The capsule database may store information about a relationship between a plurality of concepts and a plurality of operations corresponding to a plurality of domains. A capsule according to an embodiment may include a plurality of action objects (or pieces of action information) and a plurality of concept objects (or pieces concept information) included in a plan. According to an embodiment, the capsule database may store a plurality of capsules in the form of a concept action network (CAN). According to an embodiment, the plurality of capsules may be stored in a function registry included in the capsule database.

The capsule database may include a strategy registry that stores strategy information required to determine a plan corresponding to a voice input. The strategy information may include reference information for determining one plan when there is a plurality of plans corresponding to the voice input. According to an embodiment, the capsule database may include a follow-up registry that stores information about a follow-up for suggesting a follow-up to the user in a specified situation. The follow-up may include, for example, a following utterance. According to an embodiment, the capsule database may include a layout registry that stores layout information about information output through the user terminal 210. According to an embodiment, the capsule database may include a vocabulary registry that stores vocabulary information included in capsule information. According to an embodiment, the capsule database may include a dialog registry that stores information about a dialog (or interaction) with the user. The capsule database may update a stored object through a developer tool. The developer tool may include, for example, a function editor for updating an action object or a concept object. The developer tool may include a vocabulary editor for updating vocabulary. The developer tool may include a strategy editor for generating and registering a strategy for determining a plan. The developer tool may include a dialog editor that generates a dialog with the user. The developer tool may include a follow-up editor capable of activating a following target and editing a following utterance providing a hint. The following target may be determined based on a currently set target, user preference, or an environmental condition. In an embodiment, the capsule database can also be implemented in the user terminal 210.

The execution engine 233 according to an embodiment may produce a result using the generated plan. The end user interface 234 may transmit the produced result to the user terminal 210. Accordingly, the user terminal 210 may receive the result and may provide the received result to the user. The management platform 235 according to an embodiment may manage information used in the intelligent server 230. The big data platform 236 according to an embodiment may collect user data. The analytic platform 237 according to an embodiment may manage the quality of service (QoS) of the intelligent server 230. For example, the analytic platform 237 may manage a component and the processing speed (or efficiency) of the intelligent server 230.

The service server 250 according to an embodiment may provide a designated service (e.g., a food delivery service or a hotel reservation service) to the user terminal 210, including CP service A 251, CP service B 252, and/or CP service C 253, for example. According to an embodiment, the service server 250 may be a server operated by a third party. The service server 250 according to an embodiment may provide information for generating a plan corresponding to a received voice input to the intelligent server 230. The provided information may be stored in the capsule database. In addition, the service server 250 may provide result information according to the plan to the intelligent server 230.

In the foregoing integrated intelligent system, the user terminal 210 may provide various intelligent services to the user in response to a user input. The user input may include, for example, an input through a physical button, a touch input, or a voice input.

In an embodiment, the user terminal 210 may provide a voice recognition service through an intelligent application (or voice recognition application) stored therein. In this case, for example, the user terminal 210 may recognize a user utterance or a voice input received through the microphone 212 and may provide a service corresponding to the recognized voice input to the user.

In an embodiment, the user terminal 210 may perform a designated operation alone or together with the intelligent server 230 and/or the service server 250, based on the received voice input. For example, the user terminal 210 may execute an application corresponding to the received voice input and may perform the designated operation through the executed application.

In an embodiment, when the user terminal 210 provides a service together with the intelligent server 230 and/or the service server 250, the user terminal 210 may detect a user utterance using the microphone 212 and may generate a signal (or voice data) corresponding to the detected user speech. The user terminal 210 may transmit the voice data to the intelligent server 230 using the communication interface 213.

The intelligent server 230 according to an embodiment may generate, as a voice input received from the user terminal 210, a plan for performing a task corresponding to the voice input or a result of performing an operation according to the plan. The plan may include, for example, a plurality of operations for performing the task corresponding to the user's voice input and a plurality of concepts related to the plurality of operations. The concepts may define a parameter input to execute the plurality of operations or a result value output by executing the plurality of operations. The plan may include information about an association between the plurality of operations and the plurality of concepts.

The user terminal 210 according to an embodiment may receive the response using the communication interface 213. The user terminal 210 may output an audio signal generated inside the user terminal 210 to the outside using the speaker 216 or may output an image generated inside the user terminal 210 to the outside using the display 211.

Although FIG. 2 illustrates an example in which voice recognition of a voice input received from the user terminal 210, natural language understanding and generation, and production of a result using a plan are performed in the intelligent server 230, various embodiments of the disclosure are not limited thereto. For example, at least some components (e.g., the natural language platform 232, the execution engine 233, and the capsule database 238) of the intelligent server 230 may be embedded in the user terminal 210 (or the electronic device 101 of FIG. 1), and operations thereof may be performed by the user terminal 210.

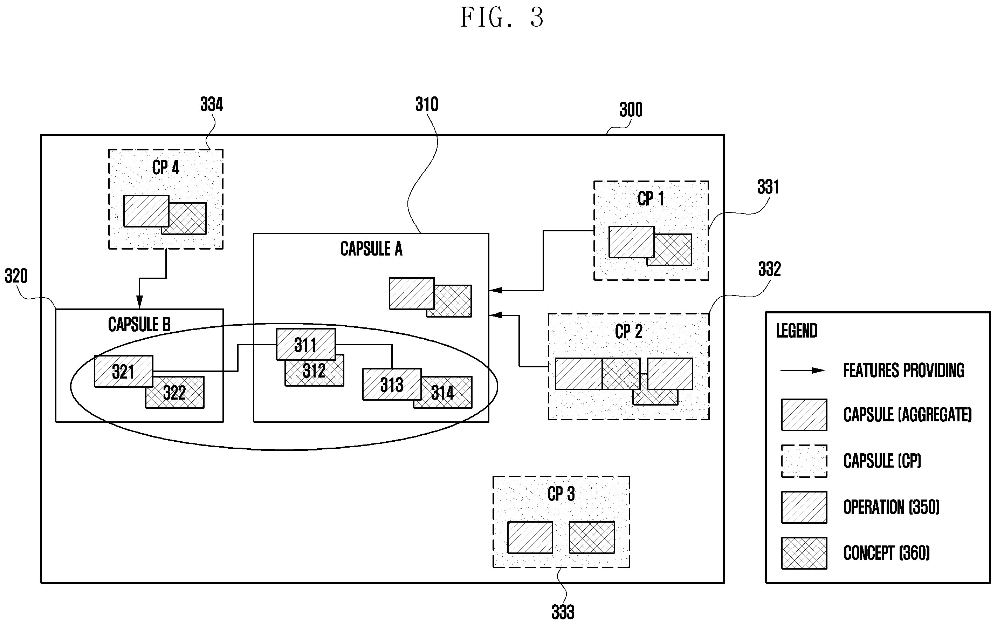

FIG. 3 illustrates a form in which information about a relationship between a concept and an operation is stored in a database according to an embodiment of the disclosure.

A capsule database (e.g., the capsule database 238 of FIG. 2) of an intelligent server (e.g., the intelligent server 230 of FIG. 2) may store a capsule in the form of a concept action network (CAN). The capsule database may store an operation of processing a task corresponding to a voice input from a user and a parameter required for the operation in the form of a concept action network (CAN).

Referring to FIG. 3, the capsule database 300 may store a plurality of capsules (capsule A 310 and capsule B 320) respectively corresponding to a plurality of domains (e.g., applications). Additional or alternate capsules 333 and 334 may also be provided. According to an embodiment, one capsule (e.g., capsule A 310) may correspond to one domain (e.g., location (geo) or application). Further, one capsule may correspond to at least one service provider (e.g., CP 1 331 or CP 2 332) for performing a function for a domain related to the capsule. According to an embodiment, one capsule may include at least one operation 350 and at least one concept 360 for performing a specified function.

A natural language platform (e.g., the natural language platform 232 of FIG. 2) may generate a plan for performing a task corresponding to a received voice input using a capsule stored in the capsule database. For example, a planner module (e.g., the planner module 232c of FIG. 2) of the natural language platform may generate the plan using the capsule stored in the capsule database. For example, the plan may be generated using operations 311 and 313 and concepts 312 and 314 of capsule A 310 and an operation 321 and a concept 322 of capsule B 320.

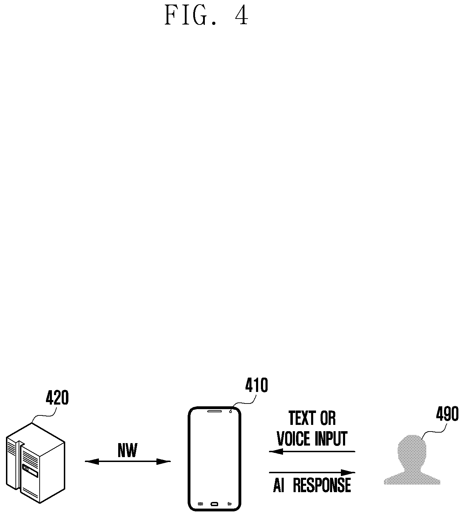

FIG. 4 illustrates a device forming an integrated intelligent system according to an embodiment of the disclosure.

Referring to FIG. 4, the integrated intelligent system may include an electronic device 410 (e.g., the user terminal 210 of FIG. 2) and an intelligent server 420 (e.g., the intelligent server 230 of FIG. 2). The electronic device 410 and the intelligent server 420 may transmit and receive data through a network.

According to various embodiments, with an intelligent service application (e.g., a voice assistant or a chatbot) executed, the electronic device 410 may obtain an instruction according to an input from a user 490. For example, the user 490 may input text through a touch input on a display of the electronic device 410 or may input a voice through a microphone.

According to various embodiments, the electronic device 410 or the intelligent server 420 may identify the intent of the user 490 from the instruction of the user 490, may determine parameters for performing an operation corresponding to the intent, and may perform the operation corresponding to the intent on a domain in which the intent is executed.

According to various embodiments, a domain is an agent that performs an operation corresponding to an instruction and may include an application, a subtask, a player included in a platform, or a service. Intent may include an intention as to which operation the user 490 inputting an instruction requires.

A parameter may be the value of at least one variable required to perform an operation of designated intent. For example, when the user 490 of the electronic device 410 utters "Please order coffee from shop A," a domain may be an ordering application of shop A to perform a corresponding operation, intent may be an order for a coffee, or a parameter may be a coffee. In another example, when the user 490 utters "Display the last text message," a domain may be a contact application that manages a text message, and intent may be text message output. A domain, intent, and a parameter are not limited to the foregoing definitions and may be replaced with different terms available in an intelligent service.

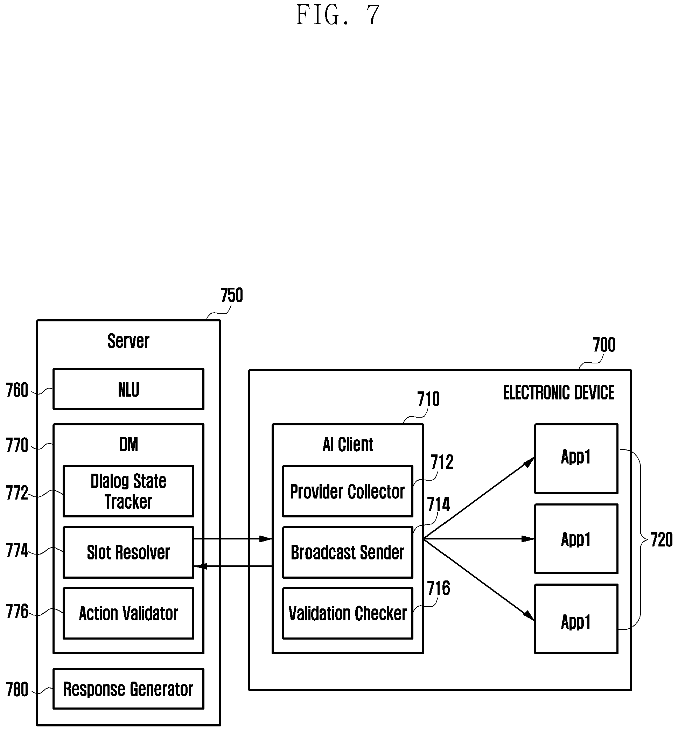

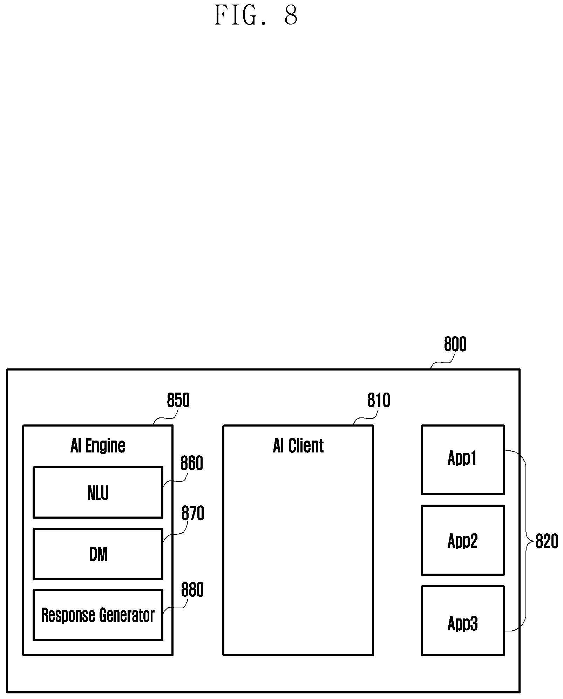

Hereinafter, a set of hardware and/or software components processing a function, such as determining intent, a parameter, and a domain and/or performing an operation, will be defined as an artificial intelligence engine (AI). The AI engine may be configured in the intelligent server 420 (e.g., an intelligent server 750 of FIG. 7) or may be embedded on the electronic device 410 (e.g., an AI engine 850 of FIG. 8). In each of an embodiment in which the AI engine is configured in the intelligent server 420 and an embodiment in which the AI engine is configured in the electronic device 410, at least some components and/or functions of the AI engine may be configured in a different device. The AI engine may include at least some of the natural language platform 232, the execution engine 233, the management platform 235, the big data platform 236, the analytic platform 237, and the capsule database 238 of FIG. 2.

According to various embodiments, there may be insufficient parameters to perform an operation of intent in an instruction input by the user 490 through the electronic device 410. For example, when parameters for performing the operation of the designated intent are a date, a time, and a place but the user 490 inputs only a date and a place through text or a voice, a time parameter may be further needed to perform the operation.

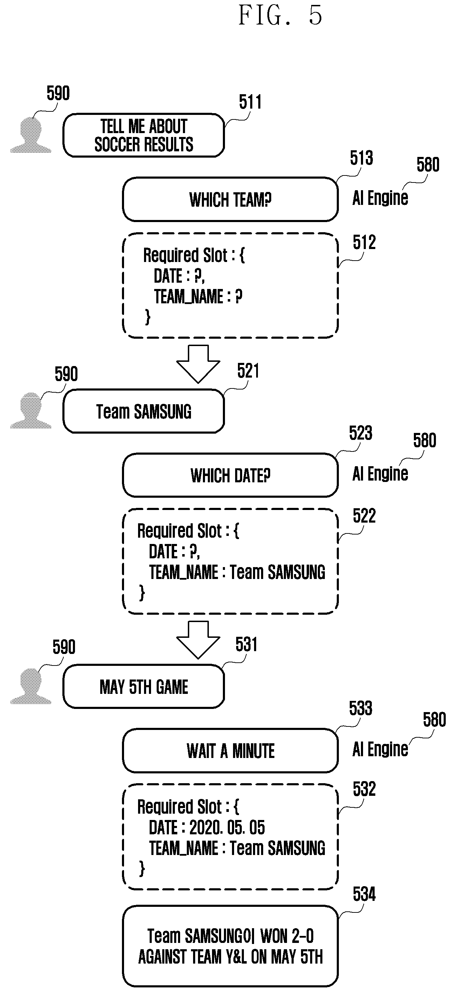

FIG. 5 illustrates a case of requesting an NLU parameter from a user according to an embodiment of the disclosure.

Referring to FIG. 5, with an intelligent service application executed, a user 590 may utter "Tell me about soccer results" (511). An AI engine 580 may convert a voice input from the user 590 into text data using a voice recognition module (e.g., the ASR module 232a of FIG. 2) and may identify the intent of the user 590 and a parameter required to perform an operation of the intent using a natural language understanding module (e.g., the NLU module 232b of FIG. 2).

For example, the AI engine 580 may identify a soccer match result retrieval as intent corresponding to the utterance, and a team name (Team _Name) and date information (Date) as required parameters. In this case, since neither a team name nor date information exists in a parameter extracted from the utterance of the user 590 and the intent cannot be executed due to a lack of parameters, the AI engine 580 may determine a team name and date information as additionally required parameters 512.

According to an embodiment, the AI engine 580 may output a query 513 for obtaining the additionally required parameters 512 through a display (e.g., the display module 160 of FIG. 1) of an electronic device or a speaker (e.g., the sound output module 155 of FIG. 1).

The user 590 may additionally utter "Team Samsung" as information relating to the team name in response to the query 513 of the electronic device (521). The AI engine 580 may additionally obtain a team name parameter by analyzing the additional utterance of the user 590. However, the AI engine 580 may identify that the date information is further needed among the parameters required for the intent of the soccer match result retrieval in the initial utterance 511 and the additional utterance 521 of the user 590 (522). The AI engine 580 may further output a query 523 for obtaining the additionally required parameter.

The user 590 may utter "May 5th game" with information related to the date in response to the query 523 of the electronic device (531). The AI engine 580 may additionally obtain a date information parameter by analyzing the additional utterance 531 of the user 590. The AI engine 580 may identify that all parameters required for the intent of the soccer match result retrieval are obtained (532) and may identify the soccer match result of Team Samsung on May 5th on a domain (e.g., Internet retrieval) corresponding to the intent.

The AI engine 580 may output a message 533 indicating that an operation corresponding to the intent is in progress, and when a resulting value of performing the operation is obtained, the AI engine 580 may output the result through a display or a speaker (534).

Referring to FIG. 5, the AI engine 580 may identify intent and a parameter required to perform an operation of the intent, and may additionally obtain a parameter from an additional query and a subsequent additional utterance of the user 590 when there is no required parameter identified in an instruction input by the user 590. This process of continuously asking the user 590 about information required for the intelligent service may cause the user 590 to feel tired and may have a negative impact on the overall experience of the user 590.

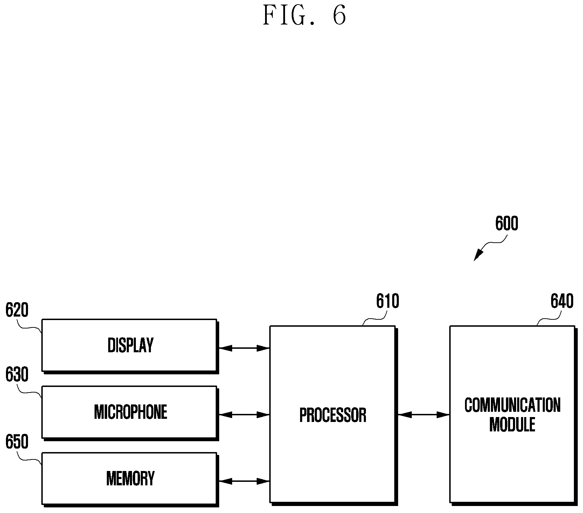

According to various embodiments, in the example of FIG. 5, the electronic device may obtain the parameters required to perform the operation of the intent even without the additional queries 513 and 523 and may perform the operation of the intent. Hereinafter, various embodiments of the disclosure will be described in detail with reference to FIG. 6 to FIG. 18.

FIG. 6 is a block diagram illustrating an electronic device according to an embodiment of the disclosure.

Referring to FIG. 6, an electronic device 600 may include a display 620, a microphone 630, a transceiver or other communication module 640, a memory 650, and at least one processor 610. In various embodiments of the disclosure, some illustrated components may be omitted or substituted. The electronic device 600 may include at least some components and/or functions of the electronic device 101 of FIG. 1 and/or the user terminal 210 of FIG. 2. At least some illustrated (or not illustrated) components of the electronic device 600 may be operatively, functionally, and/or electrically connected.

According to various embodiments, the display 620 may display various images under control of the at least one processor 610. For example, the display 620 may be configured as one of a liquid crystal display (LCD), a light-emitting diode (LED) display, an organic light-emitting diode (OLED) display, a micro-electro-mechanical systems (MEMS) display, or an electronic paper display but is not limited thereto. The display 620 may be configured as a touchscreen to detect a touch and/or proximity touch (or hovering) input using a body part (e.g., a finger) of a user or an input device (e.g., a stylus pen). The display 620 may include at least some components and/or functions of the display module 160 of FIG. 1 and/or the display 211 of FIG. 2.

According to various embodiments, the microphone 630 may collect an external sound, such as the voice of the user, and may convert the external sound into a voice signal that is digital data. According to various embodiments, the electronic device 600 may include the microphone 630 in a part of a housing (not shown), or may receive a voice signal collected from an external microphone 630 connected by wire/wirelessly.

According to various embodiments, the communication module 640 may communicate with an external device (e.g., the intelligent server 420 of FIG. 4) through a wireless network (e.g., a 4G (or long-term evolution (LTE)) network or a 5G (or new radio (NR)) network). The communication module 640 may include at least some components and/or functions of the communication module 190 of FIG. 1 and/or the communication interface 213 of FIG. 2.

According to various embodiments, the memory 650 may include a volatile memory and a nonvolatile memory and may temporarily or permanently store various types of data. The memory 650 may include at least some components and/or functions of the memory 130 of FIG. 1 and/or the memory 215 of FIG. 2 and may store the program 140 of FIG. 1. The memory 650 may store various applications (e.g., the first application 219a and the second application 219b of FIG. 2) and a client module (e.g., the client module 218 of FIG. 2) that supports an intelligent service.

The memory 650 may store various instructions that can be executed by the at least one processor 610. The instructions may include control commands for arithmetic and logical operations, data transfer, and/or input/output, which can be recognized by the at least one processor 610.

According to various embodiments, the at least one processor 610 is a component capable of performing an operation or data processing for control and/or communication of each component of the electronic device 600 and may include one or more processors. The at least one processor 610 may include at least some components and/or functions of the at least one processor 120 of FIG. 1 and/or the at least one processor 214 of FIG. 2.

According to various embodiments, although operations and data processing functions that the at least one processor 610 can implement in the electronic device 600 are not limited, various embodiments for obtaining parameters required for an intelligent service from an application (or domain) are described hereinafter. The following operations of the at least one processor 610 may be performed by loading the instructions stored in the memory 650.

According to various embodiments, the at least one processor 610 may execute an application (e.g., a voice assistant or a chatbot) that provides an intelligent service. The at least one processor 610 may receive a user input using the executed application and may obtain an instruction based on the user input. For example, the at least one processor 610 may receive a voice input by the user through the microphone 630 or may obtain text input through a touch input on the display 620 (e.g., a touchscreen).

According to various embodiments, the at least one processor 610 may output a result value corresponding to the instruction input by the user through the display 620 and/or a speaker. The operation of generating the result value corresponding to the instruction of the user may be performed by an artificial intelligence (AI) engine, and the AI engine may be configured on the intelligent server, or may be embedded in the electronic device 600.

First, an embodiment in which the AI engine is configured in the electronic device 600 and accordingly the at least one processor 610 performs natural language processing and generation of a result for an instruction through the AI engine without depending on an external server (e.g., the intelligent server 230 of FIG. 2 or the intelligent server 420 of FIG. 4) will be described.

According to an embodiment, the at least one processor 610 may obtain intent corresponding to an instruction input by the user. For example, the AI engine may identify the intent of the user by performing a syntactic or semantic analysis on the input instruction.

According to an embodiment, the at least one processor 610 may extract at least one parameter from the instruction. Here, the parameter may be at least one variable value required to perform a designated operation of the intent. In various embodiments of the disclosure, to distinguish parameters extracted or required during the operation of the AI engine, a parameter required to perform the designated operation of the intent may be defined as an intent execution parameter, a parameter extracted from words forming the instruction may be defined as an instruction extraction parameter, and a parameter additionally required to execute the intent may be defined as an additionally required parameter (or additional parameter).

According to an embodiment, the at least one processor 610 may identify at least one intent execution parameter required to perform the operation corresponding to the intent. The at least one processor 610 may receive and store information about intent execution parameters required to execute various intents from the external device (e.g., the intelligent server 420 of FIG. 4). According to another embodiment, the at least one processor 610 may determine an intent execution parameter according to natural language understanding processing. For example, as shown in the embodiment of FIG. 5, the at least one processor 610 may determine a soccer match result retrieval as the intent corresponding to the instruction and may identify a team name and date information as parameters required to execute the intent.

According to an embodiment, the at least one processor 610 may identify at least one parameter additionally required to perform the operation corresponding to the intent. For example, the at least one processor 610 may determine, as an additionally required parameter, at least one parameter that cannot be obtained from an instruction extraction parameter obtained through the instruction among the identified intent execution parameters required for the intent. For example, when an intent execution parameter of the intent of the soccer match result retrieval includes a team name and date information and an instruction extraction parameter includes the team name by the user inputting information relating to the team name (e.g., a voice or text), the date information may be determined as an additionally required parameter.

According to an embodiment, the at least one processor 610 may identify the additionally required parameters from an application stored in the memory 650. Here, the application is an application that is distinguished from an intelligent service application and may include any application capable of being installed and executed in the electronic device 600.

According to an embodiment, the at least one processor 610 may transmit a parameter request including at least one of information about the determined intent and the type and the name of the additionally required parameter to the application being executed. For example, the at least one processor 610 may transmit the parameter request to all applications being executed in a broadcast manner or may transmit the parameter request to at least one predetermined application according to information received from an external server (e.g., an administrator server).

According to an embodiment, the at least one processor 610 may receive a parameter from the application in response to the parameter request. For example, the at least one processor 610 may receive date information corresponding to Team Samsung from an Internet application.

According to an embodiment, when the additionally required parameter is obtained from the application, the at least one processor 610 may verify the validity of the obtained additionally required parameter. For example, the at least one processor 610 may identify whether the parameter has been transmitted from the approved application or whether the received parameter is a type applicable to the intent.

According to an embodiment, when the additionally required parameter is obtained from the application and the validity thereof is verified, the at least one processor 610 may identify whether it is possible to execute the intent and, if impossible, may request an additionally required parameter from the application again.

According to an embodiment, when all intent execution parameters are obtained, the at least one processor 610 may perform the operation corresponding to the intent using the obtained parameters and may output a resulting value through the display 620 or the speaker.

The foregoing embodiment in which the AI engine is configured in the electronic device 600 will be described in more detail with reference to FIG. 8.

Hereinafter, the operation of the at least one processor 610 where the AI engine is configured in the external server (e.g., the intelligent server 230 of FIG. 2 and the intelligent server 420 of FIG. 4) will be described.

According to an embodiment, the at least one processor 610 may transmit a text or voice input entered using the communication module 640 to the external server.

According to an embodiment, when voice information is received from the electronic device 600, the external server may convert the voice information into text information using a voice recognition module (e.g., the ASR module 232a of FIG. 2).

According to an embodiment, the external server may obtain intent corresponding to an instruction input by a user and may extract at least one parameter from the instruction. The external server may identify at least one intent execution parameter required to perform an operation corresponding to the intent and may transmit the intent execution parameter to the electronic device 600.

According to an embodiment, the at least one processor 610 may identify at least one parameter additionally required to perform the operation corresponding to the intent, based on information received from the external server, and may transmit a parameter request to an application.

According to an embodiment, when a parameter is obtained from the application, the at least one processor 610 may transmit the parameter to the external server using the communication module 640. The external server may perform the operation corresponding to the intent, based on the received parameter and may transmit a resulting value to the electronic device 600.

According to an embodiment, the at least one processor 610 may output the resulting value received from the external server through the display 620 or the speaker.

The foregoing embodiment in which the AI engine is configured in the external server will be described in more detail with reference to FIG. 7.

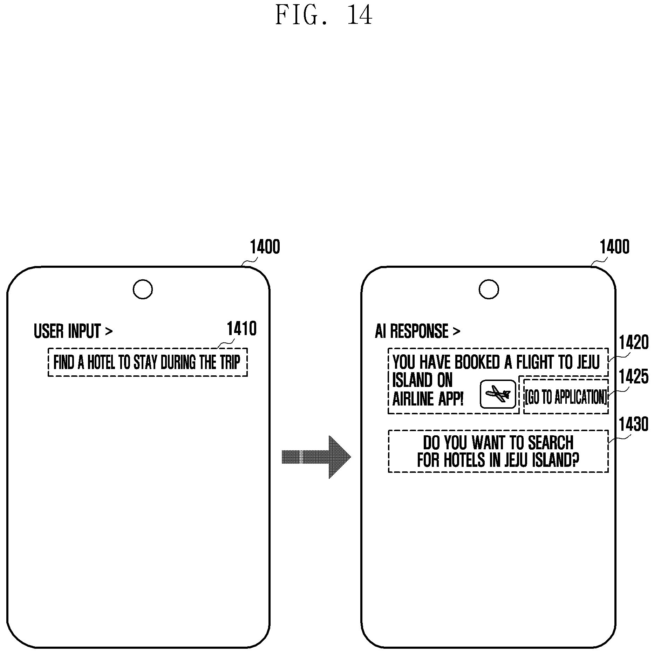

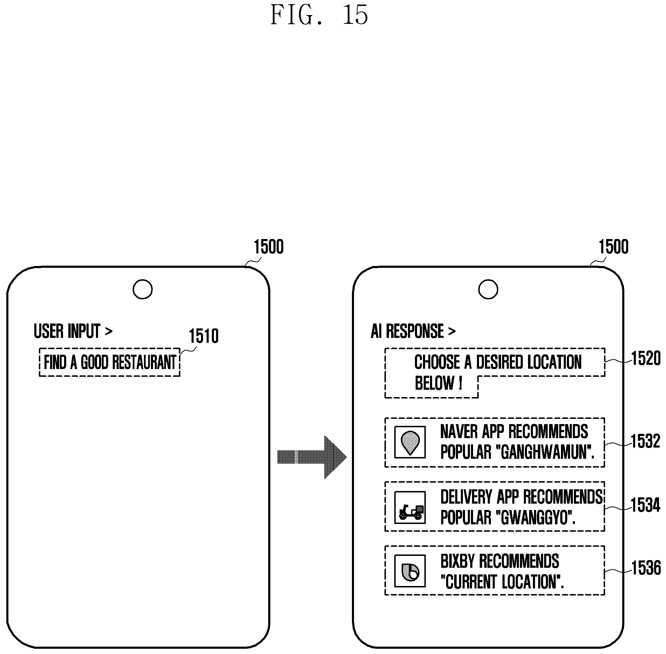

According to various embodiments, when an additional parameter is obtained from an application, the at least one processor 610 may display a graphic object including the obtained additional parameter and/or information about the application on the display 620. The at least one processor 610 may use the selected additional parameter to perform the operation corresponding to the intent in response to a user input on the graphic object. This embodiment will be described in more detail with reference to FIG. 14 and FIG. 15.

FIG. 7 illustrates architecture of an integrated intelligent system according to an embodiment of the disclosure.

Referring to FIG. 7, the integrated intelligent system may include an intelligent server 750 including an AI engine and an electronic device 700, and the intelligent server 750 may include at least some components and/or functions of the intelligent server 230 of FIG. 2 or the intelligent server 420 of FIG. 4, and the electronic device 700 may include at least some components and/or functions of the electronic device 101 of FIG. 1, the user terminal 210 of FIG. 2, or the electronic device 600 of FIG. 6.

According to various embodiments, the intelligent server 750 may include a natural language understanding (NLU) module 760, a dialog manager (DM) 770, and a response generator module 780, and the electronic device 700 may include various applications 720 and an AI client 710 that can be executed by a processor (e.g., the at least one processor 610 of FIG. 6).

According to various embodiments, the NLU module 760 may perform natural language understanding on an instruction received from the electronic device 700. The NLU module 760 may understand a user's intent by performing a syntactic analysis or a semantic analysis. For example, the NLU module 760 may understand the meaning of a word extracted from a voice input using a linguistic feature (e.g., a syntactic element) of a morpheme or phrase and may determine the intent of the user by matching the understood meaning of the word to intent.

According to various embodiments, the dialog manager 770 that manages the state of a dialog may include a dialog state tracker 772 to track the state of a conversation message transmitted to and received from the electronic device 700, a slot resolver 774 to obtain and process a parameter (or slot) corresponding to intent of a user, and an action validator module 776 to verify the validity of performing an operation corresponding to intent.

According to various embodiments, the slot resolver 774 may compare a parameter for executing the intent determined by the NLU module 760 and a parameter extracted from the user's instruction and may identify a parameter additionally required to execute the intent. The slot resolver 774 may transmit a request for the additionally required parameter to the electronic device 700, and when the additional parameter is received from the electronic device 700, the slot resolver 774 may transmit the additional parameter to the action validator module 776 and/or the response generator module 780.

According to various embodiments, the action validator module 776 may identify whether an operation corresponding to the intent can be performed using an obtained parameter. For example, the action validator module 776 may identify whether the operation corresponding to the intent can be performed using the parameter extracted from the instruction of the user and the additional parameter received from the electronic device 700. When it is identified that the intent can be executed, the action validator module 776 may provide the intent and/or the obtained parameters to the response generator module 780, and when there is an additional parameter required to execute the intent, the action validator module 776 may request the additional parameter from the slot resolver 774.

According to various embodiments, the response generator module 780 may determine a domain required to perform a task based on the intent of the user, may perform the operation using the parameters in the domain, and may generate a resulting value. The response generator module 780 may transmit the resulting value to the electronic device 700. For example, the response generator module 780 may transmit the resulting value to the electronic device 700 in the form of text. According to various embodiments, the electronic device 700 may include the AI client 710 that obtains an input from the user and performs an operation relating to an intelligent service. The AI client 710 may include a provider collector module 712, a broadcast sender module 714, and a validation checker module 716.

According to various embodiments, the provider collector module 712 may collect a list of applications from which a parameter required to execute intent is requested. For example, the provider collector module 712 may request an intent name and a parameter name from a manager server to collect the list of applications.

According to an embodiment, the manager server may be included as a part of the intelligent server 750 or may be configured as a separate external server (e.g., the server 108 of FIG. 1).

According to various embodiments, the manager server may identify an application that can respond to the parameter and may identify whether the identified application is installed or is running in the electronic device 700 or has been previously approved by the manager server or the user of the electronic device 700. Application information may include a package name, and there may be a plurality of retrieved and approved applications. The manager server may transmit the collected list of applications to the provider collector module 712 of the electronic device 700.

According to various embodiments, the broadcast sender module 714 may request an additional parameter required to execute the intent from the applications included in the application list received from the provider collector module 712. For example, the broadcast sender module 714 may substantially simultaneously (or sequentially) transmit a parameter request to the plurality of applications 720 in a broadcast manner, and the parameter request may include a package name to refer to a designated application. When transmitting the parameter request, the broadcast sender module 714 may also transmit at least some of a sender ID, an intent name, a parameter type, and a parameter name to guide the plurality of applications 720 to find a value suitable for the parameter. Here, the sender ID may refer to an identifier of an agent or a domain executing the intent.

According to various embodiments, when an additional parameter is received from the plurality of applications 720, the validation checker module 716 may verify whether the additional parameter is a parameter suitable for use in the AI engine (e.g., the NLU module 760, the dialog manager 770, or the response generator module 780) of the intelligent server 750.

The AI client 710 may transmit a parameter verified to be valid to the intelligent server 750, excluding a parameter verified to be invalid (e.g., a parameter that cannot be used for executing the intent or a parameter transmitted from an unregistered or unapproved application). When there is a plurality of parameters verified to be valid, the AI client 710 may transmit at least one parameter selected according to a user selection to the intelligent server 750.

FIG. 8 illustrates a case in which an AI engine is embedded in an electronic device according to an embodiment of the disclosure.

According to an embodiment, an AI engine 850 that performs an operation of generating a resulting value in response to a user's instruction may be configured in an electronic device 800.

According to an embodiment, the electronic device 800 may include at least some components and/or functions of the electronic device 101 of FIG. 1, the user terminal 210 of FIG. 2, or the electronic device 600 of FIG. 6.

Referring to FIG. 8, an NLU module 860, a dialog manager 870, and a response generator module 880, which form the AI engine 850, may be included in the electronic device 800, and an integrated intelligent system may include only the electronic device 800 without a separate intelligent system (e.g., the intelligent server 750 of FIG. 7). The AI engine 850, an AI client 810, and applications 820 that are illustrated may be stored in a memory (e.g., the memory 650 of FIG. 6) and may be executed by a processor (e.g., the at least one processor 610 of FIG. 6).

According to an embodiment, the AI client 810 and the applications 820 may include at least some components and/or functions of the AI client 710 and the plurality of applications 720 of FIG. 7.

According to an embodiment, the AI client 810 may transmit an instruction according to an input from the user to the AI engine 850. The AI engine 850 may include components corresponding to the NLU module 760, the dialog manager 770, and the response generator module 780 of FIG. 7.

For example, the NLU module 860 may perform natural language understanding of the instruction and may generate the intent of the user. The dialog manager 870 may perform dialog tracking, parameter acquisition and processing, and validity verification of performing an operation, and the response generator module 880 may generate a resulting value using a domain, intent, and a parameter.

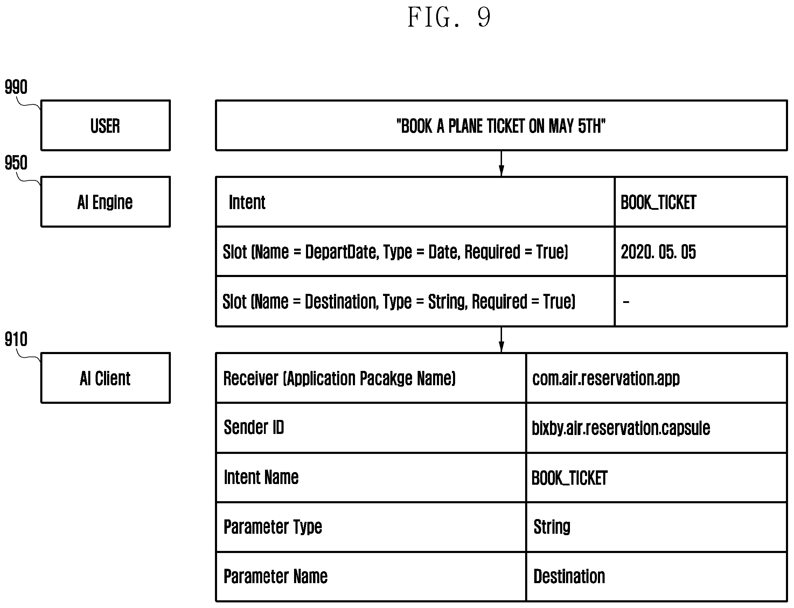

FIG. 9 illustrates an example of requesting a required parameter according to an embodiment of the disclosure.

Referring to FIG. 9, a user 990 may input an utterance "Book a plane ticket on May 5th" through a microphone (e.g., the microphone 630 of FIG. 6). An AI engine 950 of an electronic device (e.g., the electronic device 800 of FIG. 8) or an intelligent server (e.g., the intelligent server 750 of FIG. 7) may analyze an instruction input by the user 990 and may determine BOOK_TICKET as the intent of the user 990. To perform the intent of BOOK _TICKET, a departure date parameter and a destination parameter are required, and the departure date parameter may be obtained from May 5th of the instruction.

According to various embodiments, the AI engine 950 may transmit the destination parameter as an additionally required parameter to an AI client 910, and a broadcast sender module (e.g., the broadcast sender module 714 of FIG. 7) of the AI client 910 may transmit a parameter request including a sender ID, an intent name, a parameter type, and a parameter name to an application of the electronic device. In the example of FIG. 9, a package name of the application receiving the parameter request may be "com.air.reservation.app." The application may identify the intent name, the parameter type, and the parameter name of parameter information, and may identify whether the parameter is a parameter that can be obtained and provided by the application.

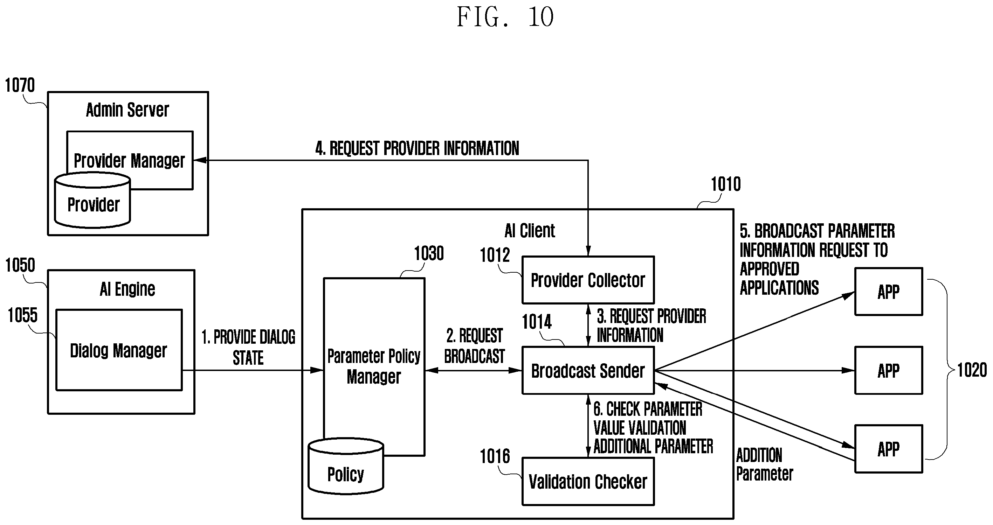

FIG. 10 illustrates an example in which an AI engine requests and receives parameter information from an application according to an embodiment of the disclosure.

Referring to FIG. 10, according to various embodiments, an AI engine 1050 and dialog manager 1055 may transmit a current dialog state to a parameter policy manager 1030 of an AI client 1010. For example, the AI engine 1050 may record intent identified from an instruction input by a user and information about a parameter required to perform the intent and may transmit the intent and the information to the parameter policy manager 1030. When the AI engine 1050 identifies an additionally required parameter from the instruction and receives the parameter from the AI client 1010 to execute the intent, the AI engine 1050 may record and transmit the additionally required parameter from the instruction and/or the parameter obtained from the AI client 1010.

According to various embodiments, the parameter policy manager 1030 may identify whether there is an additional parameter required to execute the intent from the AI engine 1050.

According to various embodiments, when there is an additionally required parameter, the parameter policy manager 1030 may determine whether to request the additional parameter from a plurality of applications 1020.

According to various embodiments, when a request for the additional parameter is determined, a broadcast sender module 1014 may obtain information about an application that is registered and approved through a provider collector module 1012. Here, the provider collector module 1012 may transmit the intent obtained from the instruction and information about the additionally required parameter to an external server (e.g., an administrator server 1070) and may receive a list of applications that can provide the additional parameter.

According to various embodiments, the broadcast sender module 1014 may transmit the request for the additional parameter to the plurality of applications 1020 in the list received from the external server and may receive the additional parameter from the plurality of applications 1020.

According to various embodiments, a validation checker module 1016 may check the validity of the additional parameter received from the plurality of applications 1020. The AI client 1010 may provide at least one additional parameter determined to be a valid value to the user through a display (e.g., the display module 160 of FIG. 1, the display 211 of FIG. 2, or the display 620 of FIG. 6) or a speaker (e.g., the sound output module 155 of FIG. 1 or the speaker 216 of FIG. 2) and may provide the additional parameter to the AI engine 1050 according to a selection by the user. The AI engine 1050 may perform an operation of the intent corresponding to the instruction using an extraction parameter extracted from the instruction and the additional parameter obtained from the plurality of applications 1020.

For example, when the user utters "Book a hotel to stay during the trip," the AI engine 1050 may transmit a current dialog state to the AI client 1010. The transmitted dialog state may include information indicating that a parameter for a hotel location is omitted. The parameter policy manager 1030 may identify the omitted parameter and may request the parameter from the plurality of applications 1020 that is preapproved through the broadcast sender module 1014. When there is an application including information relating to flight booking among the plurality of applications 1020 receiving the request for the parameter and a place recently booked by the user as a destination in the application 1020 is Jeju Island, the application 1020 may transmit a corresponding value (e.g., Jeju Island) to the AI client 1010. The AI client 1010 may determine that destination information, which is a lacking parameter in an instruction "Book a hotel to stay during the trip," is Jeju Island obtained from the application 1020. The AI client 1010 may display a graphic object indicating Jeju Island and the application on the display and may provide the parameter to the AI engine 1050 according to a selection by the user.

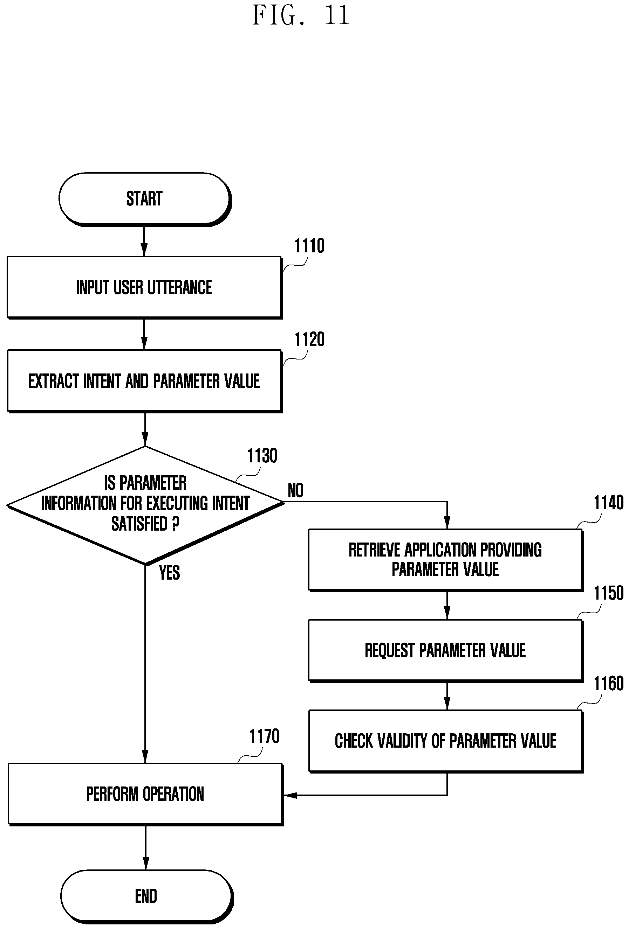

FIG. 11 is a flowchart illustrating a method for obtaining a parameter according to an embodiment of the disclosure.

The illustrated method may be performed by the foregoing AI engine and the foregoing AI client, and a description of the foregoing technical features will be omitted.

Referring to FIG. 11, according to various embodiments, in operation 1110, an electronic device (e.g., the AI client) may execute an application (e.g., a voice assistant or a chatbot) providing an intelligent service and may receive an utterance input (or text input) from a user. The electronic device may obtain an instruction as text information from the received utterance input.

According to various embodiments, in operation 1120, the AI engine of an intelligent server (e.g., the intelligent server 750 of FIG. 7) or the electronic device (e.g., the electronic device 800 of FIG. 8) may obtain intent corresponding to the instruction input by the user and a parameter (e.g., an intent execution parameter) required to execute the intent.

According to various embodiments, in operation 1130, the AI engine may determine whether parameter information for executing the intent is satisfied. For example, the AI engine may identify whether the intent can be performed using an instruction extraction parameter extracted from the instruction among the intent execution parameters required to execute the obtained intent.

According to various embodiments, when the intent cannot be performed, the AI client may identify an application from which an additionally required parameter is requested in operation 1140. For example, the AI client may receive information about the application that can respond to the parameter from an external server (e.g., an administrator server).

According to various embodiments, in operation 1150, the AI client may request the additional parameter required to execute the intent from the identified application. For example, the AI client may substantially simultaneously (or sequentially) transmit a parameter request to a plurality of applications in a broadcast manner and may use a package name to refer to a designated application.

According to various embodiments, when the additional parameter is received from the application, the AI client may verify whether the additional parameter is a parameter suitable for use in the AI engine of the intelligent server in operation 1160. The AI client may transmit a parameter verified to be valid to the AI engine, excluding a parameter verified to be invalid (e.g., a parameter that cannot be used for executing the intent or a parameter transmitted from an unregistered application).

According to various embodiments, when the parameter information for executing the intent is satisfied in operation 1130, the AI engine may perform an operation of the intent using the parameter extracted from the instruction in operation 1170.

For example, when the intent can be performed using the instruction extraction parameter extracted from the instruction among the intent execution parameters required to execute the obtained intent in operation 1130, the AI engine may perform the operation of the intent using the parameter extracted from the instruction in operation 1170.

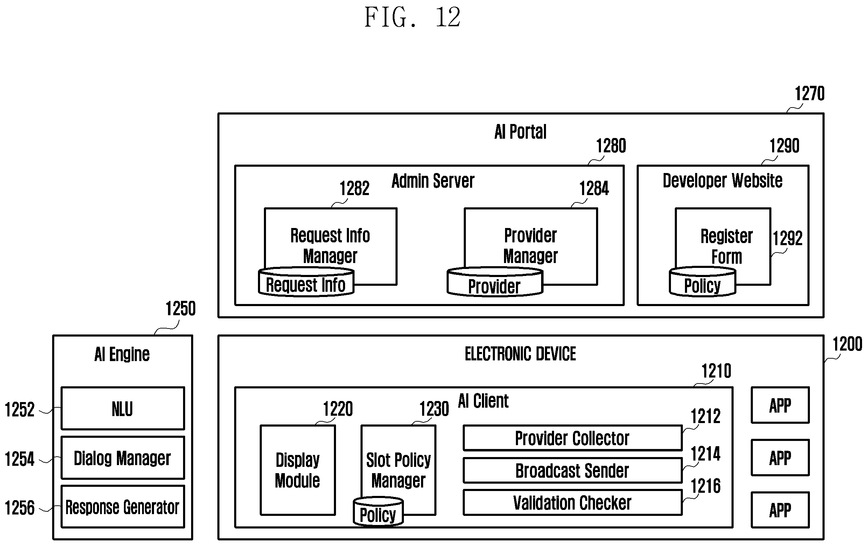

FIG. 12 illustrates architecture of an integrated intelligent system according to an embodiment of the disclosure.

Referring to FIG. 12, the integrated intelligence system may include an electronic device 1200, an AI engine 1250, and an AI portal server 1270. The AI engine 1250 may be configured in an electronic device (e.g., the electronic device 800 of FIG. 8) or an intelligent server (e.g., the intelligent server 750 of FIG. 7). The electronic device may include various applications APP for execution.

The AI engine 1250 may include an NLU module 1252 (e.g., the NLU module 760 of FIG. 7), a dialog manager 1254 (e.g., the dialog manager 770 of FIG. 7), and a response generator module 1256 (e.g., the response generator module 780 of FIG. 7), and the operation of the AI engine 1250 may be the same as the operation of the AI engine 750 of FIG. 7 and/or the AI engine 850 of FIG. 8.

The electronic device 1200 may include an AI client 1210, and the operation of the AI client 1210 may be the same as the operation of the AI client 710 of FIG. 7 and/or the AI client 810 of FIG. 8. The AI client 1210 may include a display module 1220, a slot policy manager 1230, a provider collector module 1212, a broadcast sender module 1214, and a validation checker module 1216.

According to various embodiments, the AI portal server 1270 is a component that preregisters and approves an application to provide a lacking (or additionally required) parameter to perform an operation of intent to the AI engine 1250 in the integrated intelligent system and may include a plurality of devices. As illustrated, the AI portal server 1270 may include an administrator server 1280 and a developer website server 1290. The administrator server 1280 and the developer website server 1290 may be configured as separate server devices, or functions of the administrator server 1280 and the developer website server 1290 may be performed within one server device.

According to various embodiments, the administrator server 1280 may include a request information manager 1282 and a provider manager 1284. The request information manager 1282 may be a module that registers parameter information required for an intelligent service administrator to perform a designated task (or intent) of an intelligent service (e.g., a voice assistant). For example, the request information manager 1282 may store information about intent for which a parameter is used, a parameter type, a parameter name, or a sample parameter. An application developer may identify parameter information registered by the request information manager 1282 and may identify whether an application developed by the application developer can provide the parameter information.

According to various embodiments, the provider manager 1284 may be a module that approves an application registered by the intelligent service administrator. For example, when a parameter of a registered application can be used for an operation of intent, the intelligent service administrator may approve the application. Information about the application approved by the provider manager 1284 may be transmitted to the AI client 1210 (e.g., the provider collector module 1212).

According to various embodiments, the developer website server 1290 may provide a register form module 1292 so that the application developer can register an application developed by the application developer. The application developer may identify parameter information registered by the intelligent service administrator on a website provided by the developer website server 1290 and may determine whether an application developed by the application developer can provide a corresponding parameter. The parameter information of the developer website server 1290 may be received from the request information manager 1282. When an application is registered by the application developer, registered information may be transmitted to the provider manager 1284 and may be approved by the intelligent service administrator. The information about the registered application may include an application name, a download address, and a package name.

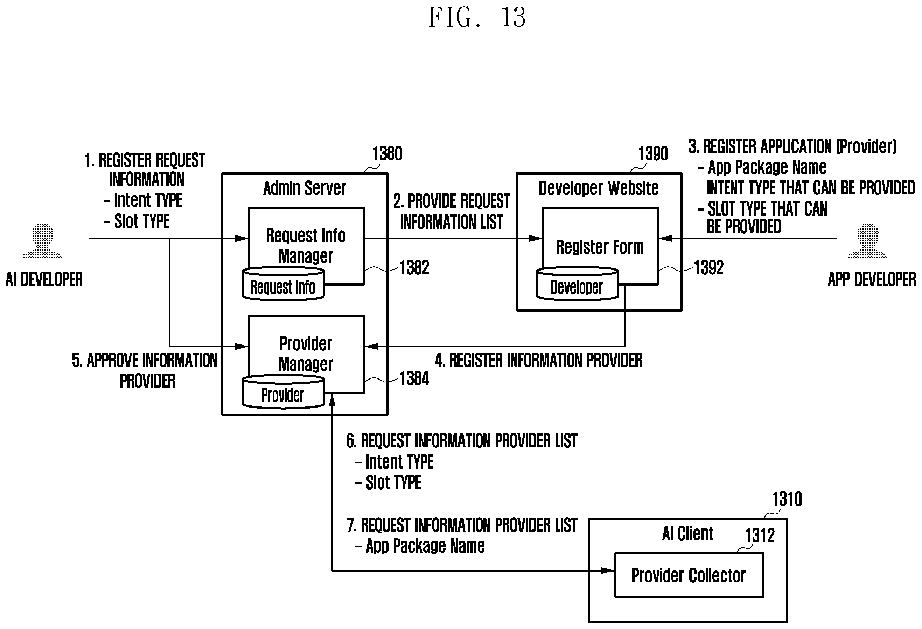

FIG. 13 illustrates an operation of registering and approving an application of an electronic device according to an embodiment of the disclosure.

Referring to FIG. 13, an administrator server 1380 and a developer website server 1390 may include at least some functions and/or components of the administrator server 1280 and the developer website server 1290 of FIG. 12.

According to various embodiments, an AI client 1310 and provider collector 1312 may include at least some functions and/or components of the AI client 710 of FIG. 7 and/or the AI client 810 of FIG. 8.

According to various embodiments, an intelligent service administrator (e.g., an AI developer) may register request information, such as parameter information required to perform a designated task (or intent) of an intelligent service (e.g., a voice assistant or a chatbot) through a request information manager 1382. For example, the request information manager 1382 may store information about intent for which a parameter input by the administrator is used, a parameter type, a parameter name, or a sample parameter.

According to various embodiments, the request information manager 1382 may provide a list of request information including registered intent and required parameter information through a developer website server 1390, and a developer may identify the list through a website provided by the developer website server 1390.

According to various embodiments, an application developer may register an application developed by the application developer through a register form module 1392 of the developer website server 1390. For example, information about the registered application (or provider) may include an application name, a download address, and a package name.

According to various embodiments, the information about the application registered by the application developer on the developer website may be registered in a provider manager 1384. The provider manager 1384 may store information about each application.

According to various embodiments, when a parameter of the registered application can be used for an operation of the intent, the intelligent service administrator may approve the application. The information about the registered and approved application may be stored and managed by the provider manager 1384.

According to various embodiments, the AI client 1310 may request a provider (or application) list. The request for the provider list may include an intent type and a parameter type. The provider manager 1384 may provide the AI client 1310 with a list of an application from which an additional parameter can be obtained. Here, the provider manager 1384 may provide a package name of the application to the AI client 1310.

FIG. 14 illustrates a screen for recommending a parameter in an electronic device according to an embodiment of the disclosure.

According to various embodiments, when an additional parameter is obtained from an application, an electronic device 1400 (e.g., the at least one processor 610 of FIG. 6) may display a graphic object including the obtained additional parameter and/or information about the application on a display (e.g., the display 620 of FIG. 6). The electronic device 1400 may use a selected additional parameter to perform an operation corresponding to intent in response to a user input on the graphic object.

Referring to FIG. 14, when a user inputs an instruction "Find a hotel to stay during the trip" (1410) by a voice input or text input, an AI engine of the electronic device 1400 (e.g., the electronic device 800 of FIG. 8) or an intelligent server (e.g., the intelligent server 750 of FIG. 7) may identify that intent is a hotel search through natural language understanding of the instruction. According to an embodiment, the AI engine may identify that hotel location information is omitted among parameters required to perform an operation of the intent. The AI engine may identify an omitted parameter (e.g., hotel location information) as additionally required parameter information among the parameters required to perform the operation of the intent. The AI engine may provide the additionally required parameter information to an AI client (e.g., the AI client 710 of FIG. 7 or the AI client 810 of FIG. 8), and the AI client may request the parameter from at least one application installed and executed in the electronic device 1400.

Referring to FIG. 14, when an airline application is installed in the electronic device 1400 and there is a record in which the user has recently booked a flight to Jeju Island through the airline application, the airline application may provide Jeju Island as a parameter value to the AI client. In this case, the electronic device 1400 may display a graphic object 1420 including the additional parameter and information about the application transmitting the additional parameter on the display. According to an embodiment, the electronic device 1400 may further display link information 1425 to go to the application (or execute the application). Further, the electronic device 1400 may display a graphic object 1430 for selecting a parameter provided by the airline application and may use an additional parameter for executing the intent, based on a selection by the user.

FIG. 15 illustrates a screen in which a plurality of applications provides an additional parameter in an electronic device according to an embodiment of the disclosure.

Referring to FIG. 15, when an input instruction is "Find a good restaurant" (1510), an AI engine of an electronic device 1500 (e.g., the electronic device 800 of FIG. 8) or an intelligent server (e.g., the intelligent server 750 of FIG. 7) may identify that intent is a restaurant search through natural language understanding of the instruction. The AI engine may identify restaurant location information as an additionally required parameter. An AI client (e.g., the AI client 710 of FIG. 7 or the AI client 810 of FIG. 8) may request the parameter from an application, and location information parameters may be transmitted from a navigation application, a delivery application, and a voice assistant application (e.g., Bixby) among applications of the electronic device 1500. The electronic device 1500 may display a plurality of graphic objects 1532, 1534, and 1536 including the parameters obtained from the respective applications and pieces of information about the applications and a graphic object 1520 requesting a user selection and may receive a user selection.

An embodiment of recommending a parameter is not limited to FIG. 14 and FIG. 15, and the electronic device according to various embodiments may also provide information relating to an additional parameter required to perform intent corresponding to an input instruction through a speaker.

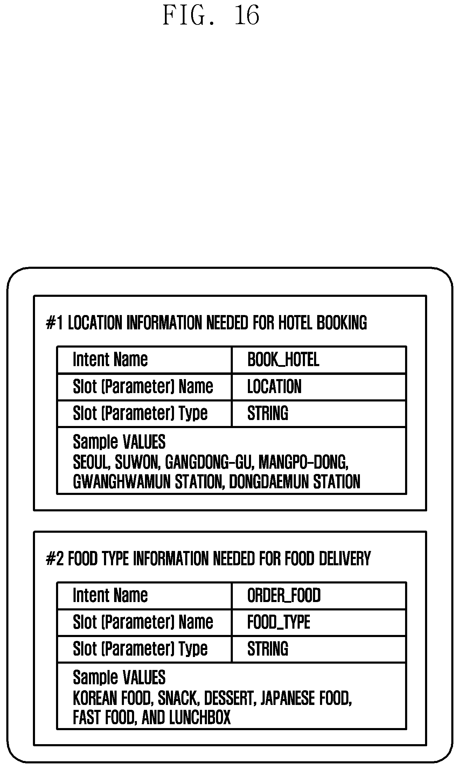

FIG. 16 illustrates an example of registering a required parameter according to an embodiment of the disclosure.

According to various embodiments, an intelligent service administrator may register information required for registration of an application on a developer website (e.g., the developer website 1290 of FIG. 12) in a request information manager (e.g., the request information manager 1282 of FIG. 12), thus providing the information to an application developer. For example, an intent name, a parameter name, parameter type information, and a sample parameter value may be registered. Referring to FIG. 16, for intent book _hotel, location as a required parameter provided by an application, string as a parameter type, and Seoul, Suwon, Gangdong-gu, Mangpo-dong, Gwanghwamun Station, and Dongdaemun Station as sample parameter values may be registered. The application developer may identify this information, and may register an application when the application developed by the application developer can provide a string type of location information.

According to an embodiment, for intent order_food, food_type as a required parameter provided by an application, string as a parameter type, and Korean food, snack, dessert, Japanese food, fast food, and lunchbox as sample parameter values may be registered. The application developer may identify this information, and may register an application when the application developed by the application developer can provide a string type of food type (food_type) information.

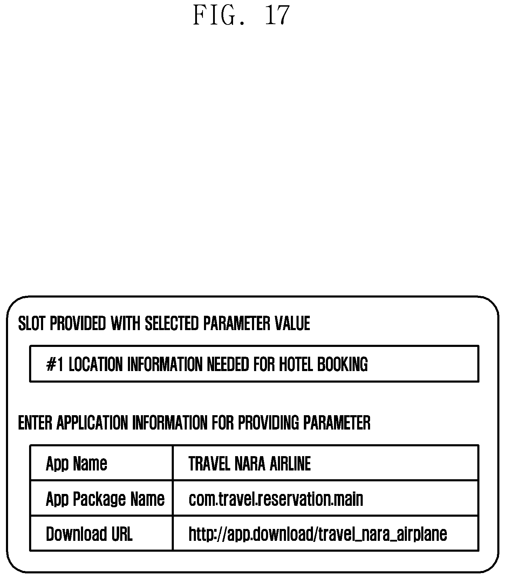

FIG. 17 illustrates an example of registering application information for providing a parameter according to an embodiment of the disclosure.

According to various embodiments, an application developer may identify information registered in a developer website (e.g., the developer website 1290 of FIG. 12), and may register an application when the application developed by the application developer satisfies a registration condition.

Referring to FIG. 17, as information about an application registered for location information as a parameter required for hotel booking intent, 'Travel Nara Airline' as an application name, 'com.travel.reservation.main' as a package name, and 'http://app.download/travel_nara_airplane' as a download URL may be registered. When the registered application is approved, the application may be registered in an administrator server (e.g., the administrator server 1280 of FIG. 12), and the information about the application may be provided to an AI client of each electronic device.

An electronic device according to various embodiments may include a display including a touchscreen, a microphone configured to receive a voice input from a user, a memory, and at least one processor configured to be operatively connected to the display, the microphone, and the memory, wherein the at least one processor may be configured to obtain an instruction based on text that is input through a touch input on the display or a voice input that is input through the microphone, obtain intent corresponding to the instruction, identify at least one parameter additionally required to perform an operation corresponding to the intent, and obtain the at least one additionally required parameter from at least one application stored in the memory.

According to various embodiments, the at least one processor may be configured to determine the intent from the instruction, and determine at least one intent execution parameter required to perform the operation corresponding to the identified intent.

According to various embodiments, the at least one processor may be configured to extract at least one instruction extraction parameter related to the intent from the instruction, and determine at least one parameter that is impossible to be obtained from the instruction extraction parameter of the intent execution parameter as the additionally required parameter.

According to various embodiments, the at least one processor may be configured to transmit a parameter request including at least one of information about the determined intent, a type of the additionally required parameter, and a name of the parameter to the at least one application.

According to various embodiments, the at least one processor may be configured to transmit the parameter request to a predetermined application of the application stored in the memory.

According to various embodiments, when the additionally required parameter is obtained from the application, the at least one processor may be configured to perform the operation corresponding to the intent using the instruction extraction parameter and the additionally required parameter.

According to various embodiments, the electronic device may further include a communication module configured to communicate with an external device, wherein the at least one processor may be configured to transmit the input text or the voice input to an external server using the communication module, and receive information relating to the at least one parameter additionally required to perform the operation corresponding to the intent from the external server.

According to various embodiments, the at least one processor may be configured to transmit the additionally required parameter obtained from the application to the external server through the communication module, and receive a resulting value of performing the intent from the external server.

According to various embodiments, the at least one processor may be configured to verify validity of the additionally required parameter obtained from the application.

According to various embodiments, when the application transmitting the additionally required parameter is a preregistered application, the at least one processor may be configured to determine that the additionally required parameter is valid.

According to various embodiments, when the additionally required parameter is obtained from the application, the at least one processor may be configured to display a graphic object including the obtained additionally required parameter and information about the application on the display.

According to various embodiments, the at least one processor may be configured to use the additionally required parameter obtained from the application to perform the operation corresponding to the intent in response to a user input for the graphic object.

According to various embodiments, when the additionally required parameter is not obtained from the application stored in the memory, the at least one processor may be configured to display a query for obtaining the additionally required parameter on the display.

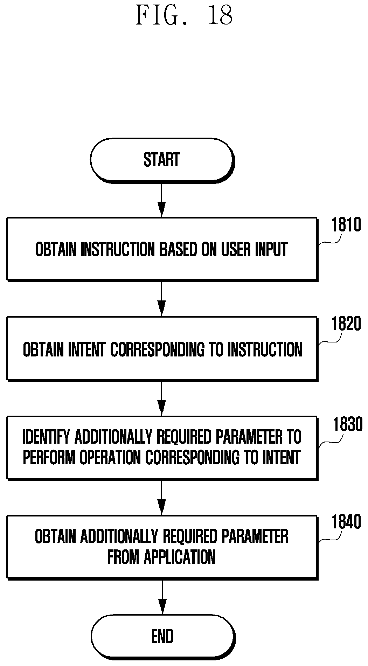

FIG. 18 is a flowchart illustrating a method for obtaining a parameter for providing an intelligent service based on natural language understanding according to an embodiment of the disclosure.

The illustrated method may be performed by the electronic device described with reference to FIGS. 6 to 17, and a description of the foregoing technical features will be omitted below.

Referring to FIG. 18, according to various embodiments, in operation 1810, the electronic device may obtain an instruction, based on a user input. For example, the electronic device may execute an application that provides an intelligent service (e.g., a voice assistant or a chatbot), and may receive a voice input from a user through a microphone or may obtain text input through a touch input on a display (e.g., a touchscreen).

According to various embodiments, in operation 1820, the electronic device may obtain intent corresponding to the instruction. According to an embodiment, the electronic device may identify the intent of the user by performing a syntactic analysis or a semantic analysis on the input instruction through an AI engine. According to another embodiment, the electronic device may transmit the instruction to an external server (e.g., the intelligent server 750 of FIG. 7), and an AI engine of the intelligent server may obtain intent by processing natural language understanding to and may provide the intent to the electronic device.

According to various embodiments, in operation 1830, the electronic device may identify an additionally required parameter to perform an operation corresponding to the intent. For example, the electronic device (or intelligent server) may determine, as an additionally required parameter, at least one parameter that cannot be obtained from an instruction extraction parameter obtained through the instruction among the identified intent execution parameters required for the intent. For example, when an intent execution parameter of the intent of the soccer match result retrieval includes a team name and date information and an instruction extraction parameter includes the team name by the user inputting information relating to the team name (e.g., a voice or text), the date information may be determined as an additionally required parameter.

According to various embodiments, in operation 1840, the electronic device may obtain the additionally required parameter from an application of the electronic device. For example, the electronic device may transmit a parameter request including at least one of information about the determined intent and the type and the name of the additionally required parameter to the application being executed. When the additional parameter is transmitted from the application, the electronic device may verify validity and may display a graphic object including the obtained additional parameter and/or information about the application on the display. The electronic device may use the selected additional parameter to perform the operation corresponding to the intent in response to a user input on the graphic object.

A method for obtaining a parameter for natural language understanding by an electronic device according to various embodiments may include obtaining an instruction based on a touch input or a voice input from a user, obtaining intent corresponding to the instruction, identifying at least one parameter additionally required to perform an operation corresponding to the intent, and obtaining the at least one additionally required parameter from at least one application.

According to various embodiments, the obtaining of the intent may include determining, by the electronic device, the intent from the instruction, and determine at least one intent execution parameter required to perform the operation corresponding to the identified intent.

According to various embodiments, the identifying of the at least one additionally required parameter may include extracting, by the electronic device, at least one instruction extraction parameter related to the intent from the instruction, and determining at least one parameter that is impossible to be obtained from the instruction extraction parameter of the intent execution parameter as the additionally required parameter.

According to various embodiments, the method may further include transmitting a parameter request including at least one of information about the determined intent, a type of the additionally required parameter, and a name of the parameter to the at least one application.

According to various embodiments, the obtaining of the intent may include transmitting the input text or the voice input to an external server, and receiving information relating to the at least one parameter additionally required to perform the operation corresponding to the intent from the external server.

According to various embodiments, the method may further include verifying validity of the additionally required parameter obtained from the application.

According to various embodiments, the method may further include displaying a graphic object including the obtained additionally required parameter and information about the application when the additionally required parameter is obtained from the application.

While the disclosure has been shown and described with reference to various embodiments thereof, it will be understood by those skilled in the art that various changes in form and detail may be made therein without departing from the scope of the disclosure as defined by the appended claims .

## Claims

1. An electronic device (600) comprising:
a display (620) comprising a touchscreen;
a microphone (630) configured to receive a voice input from a user;
a memory (650); and
at least one processor (610) configured to be operatively connected to the display (620), the microphone (630), and the memory (650),
wherein the at least one processor is further configured to:
obtain an instruction based on text that is input through a touch input on the display or based on a voice input that is input through the microphone,
obtain intent corresponding to the instruction using a first application,
determine at least one intent execution parameter required to perform an operation corresponding to the obtained intent,
extract at least one instruction extraction parameter related to the obtained intent from the obtained instruction; and
determine at least one parameter, that is undetermined from the extracted at least one instruction extraction parameter, of the determined at least one intent execution parameter as at least one additionally required parameter that is additionally required to perform the operation corresponding to the obtained intent using the first application,
transmit a request for the at least one additionally required parameter to a plurality of second applications registered and approved by the at least one processor, wherein the second applications are different from the first application, and
obtain the at least one additionally required parameter from at least one application of the plurality of second applications.

2. The electronic device (600) as claimed in claim 1, wherein the at least one processor is further configured to transmit a parameter request comprising at least one of information about the obtained intent, a type of the at least one additionally required parameter, or a name of the at least one additionally required parameter to the at least one application stored in the memory.

3. The electronic device (600) as claimed in claim 2, wherein the at least one processor is further configured to transmit the parameter request to a predetermined application of the at least one application stored in the memory.

4. The electronic device (600) as claimed in claim 1, wherein, when the at least one additionally required parameter is obtained from the at least one application stored in the memory, the at least one processor is further configured to perform the operation corresponding to the obtained intent using the extracted at least one instruction extraction parameter and the at least one additionally required parameter.

5. The electronic device (600) as claimed in claim 1, further comprising:
a transceiver configured to communicate with an external server,
wherein the at least one processor is further configured to:
transmit the text input or the voice input to the external server using the transceiver, and
receive information relating to the at least one additionally required parameter to perform the operation corresponding to the obtained intent from the external server.

6. The electronic device (600) as claimed in claim 5, wherein the at least one processor is further configured to:
transmit the at least one additionally required parameter obtained from the at least one application stored in the memory to the external server through the transceiver; and
receive a resulting value of performing the obtained intent from the external server.

7. The electronic device (600) as claimed in claim 1, wherein the at least one processor is further configured to verify validity of the at least one additionally required parameter obtained from the at least one application stored in the memory.

8. The electronic device (600) as claimed in claim 7, wherein, when the at least one application stored in the memory that provides the at least one additionally required parameter is a preregistered application, the at least one processor is further configured to determine that the at least one additionally required parameter is valid.

9. The electronic device (600) as claimed in claim 1, wherein, when the at least one additionally required parameter is obtained from the at least one application stored in the memory, the at least one processor is further configured to display a graphic object comprising the obtained at least one additionally required parameter and information about the at least one application stored in the memory on the display.

10. The electronic device (600) as claimed in claim 8, wherein the at least one processor is further configured to use the at least one additionally required parameter obtained from the at least one application stored in the memory to perform the operation corresponding to the obtained intent in response to a user input for the graphic object.

11. The electronic device (600) as claimed in claim 1, wherein, when the at least one additionally required parameter is not obtained from the at least one application stored in the memory, the at least one processor is further configured to display a query for obtaining the at least one additionally required parameter on the display.

12. A method for obtaining a parameter for natural language understanding by an electronic device (600), the method comprising:
obtaining an instruction based on a touch input or a voice input from a user;
obtaining intent corresponding to the instruction;
determining at least one intent execution parameter required to perform the operation corresponding to the obtained intent,
extract at least one instruction extraction parameter related to the obtained intent from the obtained instruction;
determining at least one parameter, that is undetermined from the extracted at least one instruction extraction parameter, of the determined at least one intent execution parameter as at least one additionally required parameter that is additionally required to perform an operation corresponding to the obtained intent;
transmitting a request for the at least one additionally required parameter to a plurality of second applications registered and approved by the at least one processor, wherein the second applications are different from the first application; and
obtaining the at least one additionally required parameter from at least one application of the plurality of second applications.

## Patentansprüche

1. Elektronische Vorrichtung (600), die Folgendes umfasst:
ein Display (620) mit einem Touchscreen;
ein Mikrofon (630), das konfiguriert ist, um eine Spracheingabe von einem Benutzer zu empfangen;
einen Speicher (650); und
mindestens einen Prozessor (610), der konfiguriert ist, um funktionsfähig mit dem Display (620), dem Mikrofon (630) und dem Speicher (650) verbunden zu werden,
wobei der mindestens eine Prozessor ferner konfiguriert ist zum:
Erhalten einer Anweisung basierend auf dem Text, der über eine Berührungseingabe auf dem Display eingegeben wird, oder basierend auf einer Spracheingabe, die über das Mikrofon eingegeben wird,
Erhalten eines der Anweisung entsprechenden Ziels unter Verwendung einer ersten Anwendung,
Bestimmen mindestens eines Parameters für die Zielausführung, der erforderlich ist, um einen Vorgang durchzuführen, der dem erhaltenen Ziel entspricht,
Extrahieren mindestens eines Anweisungs-Extraktionsparameters, der mit dem erhaltenen Ziel aus der erhaltenen Anweisung zusammenhängt; und
Bestimmen mindestens eines Parameters, der aus dem extrahierten mindestens einen Anweisungs-Extraktionsparameter nicht bestimmt ist, des bestimmten mindestens einen Parameters für die Zielausführung als mindestens einen zusätzlich erforderlichen Parameter, der zusätzlich erforderlich ist, um den Vorgang, der dem erhaltenen Ziel entspricht, unter Verwendung der ersten Anwendung durchzuführen,
Übertragen einer Anforderung für den mindestens einen zusätzlich erforderlichen Parameter an eine Vielzahl von zweiten Anwendungen, die von dem mindestens einen Prozessor registriert und genehmigt wurden, wobei sich die zweiten Anwendungen von der ersten Anwendung unterscheiden, und
Erhalten des mindestens einen zusätzlich erforderlichen Parameters von mindestens einer Anwendung aus der Vielzahl von zweiten Anwendungen.

2. Elektronische Vorrichtung (600) nach Anspruch 1, wobei der mindestens eine Prozessor ferner konfiguriert ist, um eine Parameteranforderung, die Informationen über das erhaltene Ziel, einen Typ des mindestens einen zusätzlich erforderlichen Parameters und/oder einen Namen des mindestens einen zusätzlich erforderlichen Parameters umfasst, an die mindestens eine im Speicher gespeicherte Anwendung zu übertragen.

3. Elektronische Vorrichtung (600) nach Anspruch 2, wobei der mindestens eine Prozessor ferner konfiguriert ist, um die Parameteranforderung an eine vorbestimmte Anwendung der mindestens einen im Speicher gespeicherten Anwendung zu übertragen.

4. Elektronische Vorrichtung (600) nach Anspruch 1, wobei, wenn der mindestens eine zusätzlich erforderliche Parameter aus der mindestens einen im Speicher gespeicherten Anwendung erhalten wird, der mindestens eine Prozessor ferner konfiguriert ist, um den Vorgang, der dem erhaltenen Ziel entspricht, unter Verwendung des extrahierten mindestens einen Anweisungs-Extraktionsparameters und des mindestens einen zusätzlich erforderlichen Parameters durchzuführen.

5. Elektronische Vorrichtung (600) nach Anspruch 1, die ferner Folgendes umfasst:
einen Transceiver, der konfiguriert ist, um mit einem externen Server zu kommunizieren,
wobei der mindestens eine Prozessor ferner konfiguriert ist zum:
Übertragen der Texteingabe oder der Spracheingabe unter Verwendung des Transceivers an den externen Server, und
Empfangen von Informationen über den mindestens einen zusätzlich erforderlichen Parameter, um den Vorgang auszuführen, der dem vom externen Server erhaltenen Ziel entspricht.

6. Elektronische Vorrichtung (600) nach Anspruch 5, wobei der mindestens eine Prozessor ferner konfiguriert ist zum:
Übertragen des mindestens einen zusätzlich erforderlichen Parameters, der aus der mindestens einen im Speicher gespeicherten Anwendung erhalten wurde, über den Transceiver an den externen Server; und
Empfangen eines Ergebniswertes der Durchführung des erhaltenen Ziels vom externen Server.

7. Elektronische Vorrichtung (600) nach Anspruch 1, wobei der mindestens eine Prozessor ferner konfiguriert ist, um die Gültigkeit des mindestens einen zusätzlich erforderlichen Parameters, der aus der mindestens einen im Speicher gespeicherten Anwendung erhalten wurde, zu überprüfen.

8. Elektronische Vorrichtung (600) nach Anspruch 7, wobei, wenn die mindestens eine im Speicher gespeicherte Anwendung, die den mindestens einen zusätzlich erforderlichen Parameter bereitstellt, eine vorab registrierte Anwendung ist, der mindestens eine Prozessor ferner so konfiguriert ist, dass er bestimmt, dass der mindestens eine zusätzlich erforderliche Parameter gültig ist.

9. Elektronische Vorrichtung (600) nach Anspruch 1, wobei, wenn der mindestens eine zusätzlich erforderliche Parameter aus der mindestens einen im Speicher gespeicherten Anwendung erhalten wird, der mindestens eine Prozessor ferner konfiguriert ist, um auf dem Display ein grafisches Objekt anzuzeigen, das den mindestens einen erhaltenen zusätzlich erforderlichen Parameter und Informationen über die mindestens eine im Speicher gespeicherte Anwendung umfasst.

10. Elektronische Vorrichtung (600) nach Anspruch 8, wobei der mindestens eine Prozessor ferner konfiguriert ist, um den mindestens einen zusätzlich erforderlichen Parameter, der aus der mindestens einen im Speicher gespeicherten Anwendung erhalten wurde, zu verwenden, um den Vorgang, der dem erhaltenen Ziel entspricht, als Reaktion auf eine Benutzereingabe für das grafische Objekt durchzuführen.

11. Elektronische Vorrichtung (600) nach Anspruch 1, wobei, wenn der mindestens eine zusätzlich erforderliche Parameter nicht aus der mindestens einen im Speicher gespeicherten Anwendung erhalten wird, der mindestens eine Prozessor ferner konfiguriert ist, um auf dem Display eine Anfrage zum Erhalten des mindestens einen zusätzlich erforderlichen Parameters anzuzeigen.

12. Verfahren zum Erhalten eines Parameters für das Verstehen natürlicher Sprache durch eine elektronische Vorrichtung (600), wobei das Verfahren Folgendes umfasst:
Erhalten einer Anweisung basierend auf einer Berührungseingabe oder einer Spracheingabe eines Benutzers;
Erhalten eines der Anweisung entsprechenden Ziels;
Bestimmen mindestens eines Parameters für die Zielausführung, der erforderlich ist, um einen Vorgang durchzuführen, der dem erhaltenen Ziel entspricht,
Extrahieren mindestens eines Anweisungs-Extraktionsparameters, der mit dem erhaltenen Ziel aus der erhaltenen Anweisung zusammenhängt;
Bestimmen mindestens eines Parameters, der aus dem extrahierten mindestens einen Anweisungs-Extraktionsparameter nicht bestimmt ist, des bestimmten mindestens einen Parameters für die Zielausführung als mindestens einen zusätzlich erforderlichen Parameter, der zusätzlich erforderlich ist, um einen Vorgang durchzuführen, der dem erhaltenen Ziel entspricht;
Übertragen einer Anforderung für den mindestens einen zusätzlich erforderlichen Parameter an eine Vielzahl von zweiten Anwendungen, die von dem mindestens einen Prozessor registriert und genehmigt wurden, wobei sich die zweiten Anwendungen von der ersten Anwendung unterscheiden; und
Erhalten des mindestens einen zusätzlich erforderlichen Parameters von mindestens einer Anwendung aus der Vielzahl von zweiten Anwendungen.

## Revendications

1. Dispositif électronique (600) comprenant :
une unité d'affichage (620) comprenant un écran tactile ;
un microphone (630) configuré pour recevoir une entrée vocale d'un utilisateur ;
une mémoire (650) ; et
au moins un processeur (610) configuré pour être connecté de manière opérationnelle à l'unité d'affichage (620), au microphone (630), et à la mémoire (650),
où l'au moins un processeur est en outre configuré pour :
obtenir une instruction sur la base d'un texte saisi par une entrée tactile sur l'unité d'affichage ou sur la base d'une entrée vocale captée par le microphone,
obtenir l'intention correspondant à l'instruction à l'aide d'une première application,
déterminer au moins un paramètre d'exécution d'intention requis pour l'exécution d'une opération correspondant à l'intention obtenue,
extraire au moins un paramètre d'extraction d'instruction lié à l'intention obtenue de l'instruction obtenue ; et
déterminer au moins un paramètre, qui est indéterminé parmi l'au moins un paramètre d'extraction d'instruction extrait, de l'au moins un paramètre d'exécution d'intention déterminé comme au moins un paramètre requis supplémentaire qui est requis de façon supplémentaire pour exécuter l'opération correspondant à l'intention obtenue à l'aide de la première application,
transmettre une requête pour l'au moins un paramètre requis supplémentaire à une pluralité de deuxièmes applications enregistrées et approuvées par l'au moins un processeur, où les deuxièmes applications sont différentes de la première application, et
obtenir l'au moins un paramètre requis supplémentaire à partir d'au moins une application de la pluralité de deuxièmes applications.

2. Dispositif électronique (600) selon la revendication 1, où l'au moins un processeur est en outre configuré pour transmettre une requête de paramètres comprenant au moins l'un des éléments suivants : des informations sur l'intention obtenue, un type de l'au moins un paramètre requis supplémentaire, ou un nom de l'au moins un paramètre requis supplémentaire à l'au moins une application stockée dans la mémoire.

3. Dispositif électronique (600) selon la revendication 2, où l'au moins un processeur est en outre configuré pour transmettre la requête de paramètres à une application prédéterminée de l'au moins une application stockée dans la mémoire.

4. Dispositif électronique (600) selon la revendication 1, où, lorsque l'au moins un paramètre requis supplémentaire est obtenu de l'au moins une application stockée dans la mémoire, l'au moins un processeur est en outre configuré pour exécuter l'opération correspondant à l'intention obtenue à l'aide de l'au moins un paramètre d'extraction d'instruction extrait et de l'au moins un paramètre requis supplémentaire.

5. Dispositif électronique (600) selon la revendication 1, comprenant en outre :
un émetteur-récepteur configuré pour communiquer avec un serveur externe,
où l'au moins un processeur est en outre configuré pour :
transmettre l'entrée de texte ou l'entrée vocale au serveur externe à l'aide de l'émetteur-récepteur, et
recevoir des informations sur l'au moins un paramètre requis supplémentaire pour exécuter l'opération correspondant à l'intention obtenue du serveur externe.

6. Dispositif électronique (600) selon la revendication 5, où l'au moins un processeur est en outre configuré pour :
transmettre l'au moins un paramètre requis supplémentaire obtenu de l'au moins une application stockée dans la mémoire au serveur externe à travers l'émetteur-récepteur ; et
recevoir une valeur résultante de l'exécution de l'intention obtenue du serveur externe.

7. Dispositif électronique (600) selon la revendication 1, où l'au moins un processeur est en outre configuré pour vérifier la validité de l'au moins un paramètre requis supplémentaire obtenu de l'au moins une application stockée dans la mémoire.

8. Dispositif électronique (600) selon la revendication 7, où, lorsque l'au moins une application stockée dans la mémoire qui fournit l'au moins un paramètre requis supplémentaire est une application préenregistrée, l'au moins un processeur est en outre configuré pour déterminer que l'au moins un paramètre requis supplémentaire est valide.

9. Dispositif électronique (600) selon la revendication 1, où, lorsque l'au moins un paramètre requis supplémentaire est obtenu de l'au moins une application stockée dans la mémoire, l'au moins un processeur est en outre configuré pour afficher sur l'unité d'affichage un objet graphique comprenant l'au moins un paramètre requis supplémentaire obtenu et des informations sur l'au moins une application stockée dans la mémoire.

10. Dispositif électronique (600) selon la revendication 8, où l'au moins un processeur est en outre configuré pour utiliser l'au moins un paramètre requis supplémentaire obtenu de l'au moins une application stockée dans la mémoire pour exécuter l'opération correspondant à l'intention obtenue en réponse à une entrée d'utilisateur pour l'objet graphique.

11. Dispositif électronique (600) selon la revendication 1, où, lorsque l'au moins un paramètre requis supplémentaire n'est pas obtenu de l'au moins une application stockée dans la mémoire, l'au moins un processeur est en outre configuré pour afficher une requête permettant d'obtenir l'au moins un paramètre requis supplémentaire sur l'unité d'affichage.

12. Procédé pour obtenir un paramètre pour la compréhension du langage naturel par un dispositif électronique (600), le procédé comprenant :
obtenir une instruction sur la base d'une entrée tactile ou d'une entrée vocale d'un utilisateur,
obtenir l'intention correspondant à l'instruction,
déterminer au moins un paramètre d'exécution d'intention requis pour l'exécution de l'opération correspondant à l'intention obtenue,
extraire au moins un paramètre d'extraction d'instruction lié à l'intention obtenue de l'instruction obtenue ;
déterminer au moins un paramètre, qui est indéterminé parmi l'au moins un paramètre d'extraction d'instruction extrait, de l'au moins un paramètre d'exécution d'intention déterminé comme au moins un paramètre requis supplémentaire qui est requis de façon supplémentaire pour exécuter une opération correspondant à l'intention obtenue,
transmettre une requête pour l'au moins un paramètre requis supplémentaire à une pluralité de deuxièmes applications enregistrées et approuvées par l'au moins un processeur, où les deuxièmes applications sont différentes de la première application, et
obtenir l'au moins un paramètre requis supplémentaire à partir d'au moins une application de la pluralité de deuxièmes applications.
